# FASCICULE DE BREVET EUROPEEN

(11) **EP 3 734 984 B1**
(45) Date de publication et mention de la délivrance du brevet: **26.05.2021**
(21) Numéro de dépôt: 20169862.8
(22) Date de dépôt: 16.04.2020
(51) Int. Cl.: H04Q 9/00

(54) **PROCÉDÉ DE RELEVÉ DE COMPTEURS À FLUIDES**
VERFAHREN ZUM ABLESEN VON FLUIDZÄHLERN
METHOD FOR READING UTILITY METERS

(30) Priorité: 30.04.2019 FR 1904592
(43) Date de publication de la demande: 04.11.2020
(73) Titulaire: Sagemcom Energy & Telecom SAS, 92500 Rueil-Malmaison (FR)
(72) Inventeur: TEBOULLE, Henri, 92500 Rueil Malmaison (FR)
(74) Mandataire: Cabinet Le Guen Maillet

(56) Documents cités:
- CN-A- 105 185 075
- US-A1- 2014 167 981

## Description

### DOMAINE TECHNIQUE

La présente invention concerne un procédé de relevé automatisé à distance de compteurs à fluides tels que des compteurs d'eau ou à gaz exécuté dans un système de gestion automatisée de comptage dans le cadre d'un service de distribution de fluides, ainsi qu'un système et des dispositifs mettant en œuvre ledit procédé.

### ETAT DE LA TECHNIQUE ANTERIEURE

Par soucis d'efficacité et de rationalisation, les fournisseurs d'électricité, de gaz et d'eau, ont cherché à automatiser le relevé des consommations de leurs clients en évitant le recours à des déplacements d'opérateurs pour effectuer les relevés. Les réseaux de distribution d'électricité sont particulièrement adaptés aux relevés automatisés et à distance des compteurs électriques car ils offrent une infrastructure permettant des communications par courants porteurs en ligne. Les réseaux de communication par courants porteurs en ligne pour des systèmes de gestion automatisée de comptage AMM ont fait leur apparition ces dernières années. Dans de tels réseaux de communication par courants porteurs en ligne, des communications sont établies entre des compteurs électriques, dits *compteurs électriques intelligents* (« smart electricity meters » en anglais), et un nœud concentrateur, parfois appelé *concentrateur de données* (« data concentrator » en anglais) ou *nœud de base* (« base node » en anglais) ou *coordinateur* (« coordinator » en anglais), pour permettre notamment un relevé automatisé à distance de mesures de consommation électrique effectuées par lesdits compteurs électriques intelligents. Plusieurs concentrateurs de données sont alors géographiquement déployés pour répartir la charge de collecte de relevés de comptage des compteurs électriques intelligents. Chaque concentrateur de données sert alors de relais entre les compteurs électriques intelligents qui lui sont reliés et une entité de gestion du système de gestion automatisée de comptage AMM qui est en charge de traiter de manière centralisée les relevés de comptage.

Contrairement aux infrastructures de distribution d'électricité, les infrastructures de distribution d'eau et de gaz ne peuvent servir d'infrastructures de communication. Malgré tout, la tendance à la rationalisation des relevés a aussi touché les fournisseurs de gaz et d'eau. Les compteurs à gaz et à eau, appelés *compteurs à fluides* par la suite, sont eux aussi devenus intelligents et des solutions permettant un relevé automatique et à distance de ces compteurs ont été développées. Ces solutions s'appuient notamment sur le standard de communication WM-Bus (NF EN 13757-4, « Communication systems for meters and remote reading of meters - Part 4: Wireless meter readout (Radio meter reading for operation in SRD bands) » en terminologie anglo-saxonne). Le standard WM-Bus est un standard de communication sans fils offrant un excellent compromis entre faible encombrement des antennes et portée en intérieur comme en extérieur élevée (jusqu'à « 1 » km sans répéteurs). Présentant un caractère unidirectionnel ou bidirectionnel selon les modes de mise en œuvre, le standard WM-Bus autorise des interventions à distance par un centre de contrôle. Le déploiement d'une infrastructure de communication WM-Bus nécessite une implantation d'un modem d'autonomie élevée (jusqu'à 12 ans pour une alimentation au lithium) sur chaque compteur à fluides et un concentrateur central (« 1 » concentrateur central par immeuble de « 6 » à « 7 » étages en moyenne) chargé de collecter les informations relevées et de les transmettre à une entité de gestion.

Il est connu que les compteurs à fluides sont en général à proximité des compteurs électriques. Il paraît alors sous-optimal de créer une infrastructure de communication dédiée aux compteurs à fluides alors qu'une infrastructure de communication est disponible à proximité pour les relevés de compteurs électriques.

Il est alors souhaitable de pallier ces inconvénients de l'état de la technique. Il est notamment souhaitable de fournir une solution qui permette de collecter des informations de consommation mesurées par des compteurs à fluides par l'intermédiaire d'un réseau de communication par courants porteurs en ligne pour des systèmes de gestion automatisée de comptage AMM mis en œuvre dans un réseau de distribution d'électricité.

Voir aussi la publication US2014/0167981.

### EXPOSE DE L'INVENTION

Selon un premier aspect de l'invention, l'invention concerne un procédé de relevé automatisé à distance d'un compteur à fluides exécuté dans un système de gestion automatisée de comptage dans le cadre d'un service de distribution de fluides, comprenant un compteur à fluides et un système, dit système compteur centralisateur, le compteur à fluides étant apte à transmettre des trames conformes à un standard de communication sans fils au système compteur centralisateur, le système compteur centralisateur étant apte à recevoir lesdites trames et à communiquer par courants porteurs en ligne avec un concentrateur de données dans une première bande fréquentielle via un premier réseau de type réseau de communication par courants porteurs en ligne, ledit concentrateur de données communiquant avec une entité de gestion du système de gestion automatisée de comptage via un deuxième réseau. Le procédé comprend : effectuer une phase d'appariement entre le système compteur centralisateur et le compteur à fluides dans laquelle le système compteur centralisateur se considère apparié avec le compteur à fluides lorsqu'il reçoit au moins une trame de signalisation de la part dudit compteur à fluides et, lorsqu'il est apparié avec le compteur à fluides, instancie une application d'émulation émulant un compteur à fluides virtuel apte à communiquer directement avec le concentrateur de données pour le compte dudit compteur à fluides ; effectuer une phase de transmission d'index durant laquelle, le système compteur centralisateur reçoit des trames en provenance du compteur à fluides comprenant chacune des informations représentatives d'un relevé de consommation de fluides, le compteur à fluides virtuel se chargeant de retransmettre lesdites informations représentatives d'un relevé de consommation de fluides à l'entité de gestion via le concentrateur de données.

Le procédé de l'invention permet donc de collecter des informations de consommation mesurées par des compteurs à fluides par l'intermédiaire d'un réseau de communication par courants porteurs en ligne pour des systèmes de gestion automatisée de comptage AMM mis en œuvre dans un réseau de distribution d'électricité.

Selon un mode de réalisation, la phase d'appariement comprend en outre, suite à la réception par le système compteur centralisateur d'une trame de signalisation parmi une pluralité de trames de signalisation transmises par le compteur à fluides pendant la phase d'appariement, transmettre depuis le système compteur centralisateur au compteur à fluides, une trame comprenant une information représentative d'un appariement réussi, la réception de la trame comprenant l'information représentative de l'appariement réussi par le compteur à fluides mettant fin à la transmission de la pluralité de trames de signalisation. Selon un mode de réalisation, pendant la phase de transmission d'index, le système compteur centralisateur fixe une durée prédéfinie de mise en veille du compteur à fluides, le compteur à fluides se mettant en veille pendant la durée prédéfinie après chaque envoi d'une trame comprenant des informations représentatives d'un relevé de consommation de fluides.

Selon un mode de réalisation, le système compteur centralisateur transmet une trame, dite de relevé, demandant l'envoi d'une trame comprenant des informations représentatives d'un relevé de consommation de fluides au compteur à fluides afin d'obtenir du compteur à fluides une trame comprenant des informations représentatives d'un relevé de consommation de fluides.

Selon un mode de réalisation, la trame de signalisation permettant au système compteur centralisateur de se considérer comme apparié avec le compteur à fluides pendant la phase d'appariement fait partie d'une pluralité de trames de signalisation transmises par le compteur à fluides pendant une période prédéfinie.

Selon un mode de réalisation, les trames comprenant des informations représentatives d'un relevé de consommation de fluides en provenance du compteur à fluides pendant la phase de transmission d'index sont envoyées à intervalles prédéfinis réguliers, le compteur à fluides se mettant en veille entre chaque envoi.

Selon un mode de réalisation, le système compteur centralisateur comprend un compteur centralisateur et une unité intermédiaire associée à un compteur à fluides, le compteur centralisateur et l'unité intermédiaire étant deux dispositifs séparés aptes à communiquer entre eux par courants porteurs en ligne dans une deuxième bande fréquentielle via un troisième réseau de type réseau de communication par courants porteurs en ligne. Pendant la phase d'appariement, l'unité intermédiaire reçoit chaque trame de signalisation envoyée par le compteur à fluides et considère que le système compteur centralisateur et le compteur à fluides sont appariés lorsqu'il reçoit une trame de signalisation suite à une réception d'une trame contenant une information représentative d'une demande d'appairage de la part du compteur centralisateur.

Selon un mode de réalisation, en cas d'appariement réussi entre le compteur à fluides et le système compteur centralisateur, l'unité intermédiaire transmet une trame contenant une information représentative d'un appariement réussi au compteur centralisateur, une réception d'une trame contenant une information représentative d'un appariement réussi par le compteur centralisateur provoquant une obtention par le compteur centralisateur d'une clé de cryptage correspondant audit compteur à fluides et une transmission par le compteur centralisateur à l'unité intermédiaire de ladite clé de cryptage afin que chaque communication entre ledit compteur à fluides et l'unité intermédiaire puisse être cryptée. Selon un mode de réalisation, chaque transmission d'une trame de relevé par le système compteur centralisateur comprend une transmission d'une première trame de relevé par l'unité intermédiaire au compteur à fluides, la transmission de ladite première trame de relevé étant provoquée par une réception d'une deuxième trame de relevé en provenance du compteur centralisateur.

Selon un mode de réalisation, l'application d'émulation émulant un compteur à fluides virtuel est instanciée par le compteur centralisateur, chaque trame comprenant des informations représentatives d'un relevé de consommation de fluides reçu par le système compteur centralisateur est reçue par l'unité intermédiaire qui la retransmet au compteur centralisateur pour que le compteur à fluides virtuel qu'il a instancié puisse retransmettre lesdites informations représentatives d'un relevé de consommation de fluides à l'entité de gestion via le concentrateur de données.

Selon un deuxième aspect de l'invention, l'invention concerne un système, dit système de relevé, utilisé dans un système de gestion automatisée de comptage dans le cadre d'un service de distribution de fluides, ledit système de gestion automatisée de comptage comprenant une pluralité de compteurs à fluides. Le système de relevé comprend au moins un premier module de communication conforme à un standard de communication sans fils utilisé par un compteur à fluides et un deuxième module de communication adapté pour communiquer par courants porteurs en ligne avec un concentrateur de données dans une première bande fréquentielle via un premier réseau de type réseau de communication par courants porteurs en ligne, ledit concentrateur de données communiquant avec une entité de gestion du système de gestion automatisée de comptage via un deuxième réseau et en ce que le système de relevé comprend des moyens pour instancier une application d'émulation émulant un compteur à fluides virtuel apte à communiquer directement avec le concentrateur de données pour chaque compteur à fluides de la pluralité, et, pour chaque compteur à fluides de la pluralité, le compteur à fluides virtuel correspondant se charge de retransmettre des informations représentatives d'un relevé de consommation de fluides fournies au système de relevé par ledit compteur à fluides de la pluralité à l'entité de gestion via le concentrateur de données.

Selon un mode de réalisation, le système de relevé comprend au moins une unité intermédiaire, chaque unité intermédiaire comprenant un module de communication identique au premier module de communication et étant associée à un compteur à fluides de la pluralité de type compteur à eau et/ou un compteur à fluides de la pluralité de type compteur à gaz, et un compteur centralisateur comprenant le deuxième module de communication et les moyens pour instancier une application d'émulation émulant un compteur à fluides virtuel apte à communiquer directement avec le concentrateur de données pour chaque compteur à fluides de la pluralité, chaque unité intermédiaire et le compteur centralisateur comprenant un module de communication adapté pour communiquer entre eux par courants porteurs en ligne dans une deuxième bande fréquentielle via un troisième réseau de type réseau de communication par courants porteurs en ligne.

Selon un troisième aspect de l'invention, l'invention concerne un dispositif, dit unité intermédiaire, utilisé dans un système de gestion automatisée de comptage dans le cadre d'un service de distribution de fluides, ledit système de gestion automatisée de comptage comprenant une pluralité de compteurs à fluides. L'unité intermédiaire est associée à un compteur à fluides de la pluralité de type compteur à eau et/ou à un compteur à fluides de la pluralité de type compteur à gaz et comprend un premier module de communication conforme à un standard de communication sans fils utilisé par chaque compteur à fluides de la pluralité et un deuxième module de communication adapté pour communiquer par courants porteurs en ligne avec un dispositif, dit compteur centralisateur, dans une première bande fréquentielle via un premier réseau de type réseau de communication par courants porteurs en ligne, le dit compteur centralisateur étant lui-même adapté pour communiquer par courants porteurs en ligne dans une deuxième bande fréquentielle via un deuxième réseau de type réseau de communication par courants porteurs en ligne avec un concentrateur de données, ledit concentrateur de données communiquant avec une entité de gestion du système de gestion automatisée de comptage via un troisième réseau, l'unité intermédiaire étant apte à relayer des informations représentatives de consommations de fluides transmises par chaque compteur à fluides auquel ladite unité est rattachée vers le compteur centralisateur afin que le compteur centralisateur puisse relayer lesdites informations vers l'entité de gestion via le concentrateur de données.

Selon un quatrième aspect de l'invention, l'invention concerne un dispositif, dit compteur centralisateur, utilisé dans un système de gestion automatisée de comptage dans le cadre d'un service de distribution de fluides, ledit système de gestion automatisée de comptage comprenant une pluralité de compteurs à fluides. Le compteur centralisateur est associé à au moins une unité intermédiaire selon le troisième aspect et comprend un troisième module de communication pour communiquer par courants porteurs en ligne avec chaque unité intermédiaire dans une première bande fréquentielle via le premier réseau et un quatrième module de communication pour communiquer par courants porteurs en ligne dans une deuxième bande fréquentielle via le deuxième réseau avec le concentrateur de données, et des moyens pour instancier une application d'émulation émulant un compteur à fluides virtuel apte à communiquer directement avec le concentrateur de données pour chaque compteur à fluides de la pluralité, et, pour chaque compteur à fluides de la pluralité, le compteur à fluides virtuel correspondant se charge de retransmettre des informations représentatives d'un relevé de consommation de fluides fournies au système de relevé par ledit compteur à fluides de la pluralité à l'entité de gestion via le concentrateur de données.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication, supportant un relevé automatisé et à distance d'informations de comptage de compteurs à fluides, dans lequel la présente invention est implémentée ;
[Fig. 2] illustre schématiquement un exemple d'agencement matériel d'une unité de contrôle utilisée dans le système de communication ;
[Fig. 3A] illustre schématiquement un agencement de compteur centralisateur du système de communication ;
[Fig. 3B] illustre schématiquement un agencement d'une unité intermédiaire du système de communication ;
[Fig. 3C] illustre schématiquement un agencement d'un compteur à fluides ;
[Fig. 3D] illustre schématiquement un exemple d'agencement d'un compteur électrique intelligent selon un mode de réalisation de l'invention ;
[Fig. 4] illustre schématiquement un premier mode de réalisation d'un procédé de relevé de compteurs à fluides ;
[Fig. 5] illustre schématiquement un deuxième mode de réalisation d'un procédé de relevé de compteurs à fluides ;
[Fig. 6] illustre schématiquement un troisième mode de réalisation d'un procédé de relevé de compteurs à fluides ; et,
[Fig. 7] illustre schématiquement un quatrième mode de réalisation d'un procédé de relevé de compteurs à fluides.

### EXPOSE DETAILLE DE MODES DE REALISATION

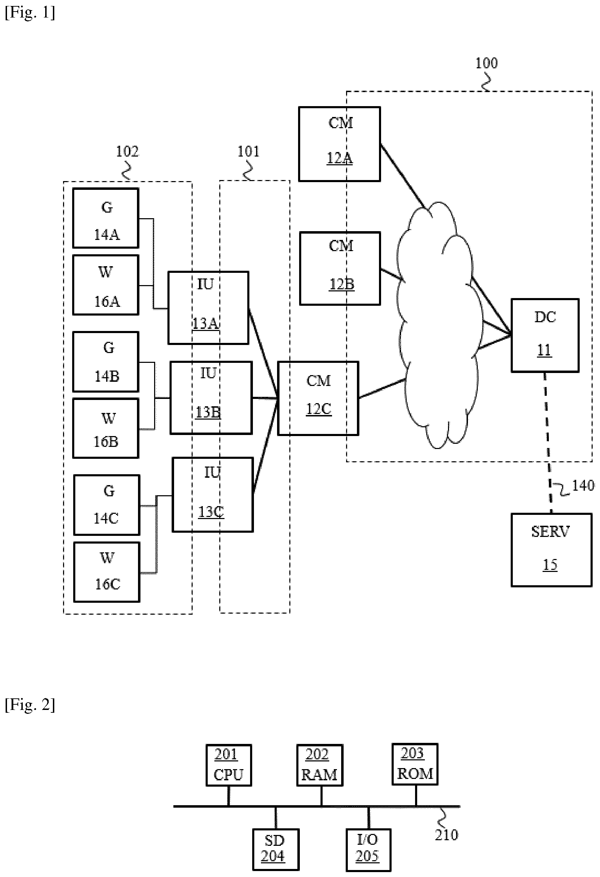

La **Fig. 1** illustre ainsi un système de communication, supportant un relevé automatisé et à distance d'informations de comptage de compteurs à fluides, dans lequel la présente invention est implémentée.

Le système de communication comprend au moins un réseau de communication par courants porteurs en ligne (« PowerLine Communications Network (PLCN) » en terminologie anglo-saxonne) 100, simplement dénommé *réseau PLCN 100* par la suite, déployé de manière logique sur un réseau de distribution d'électricité. Le réseau PLCN 100 permet la mise en place d'un système de gestion automatisée de comptage AMM dans le cadre de services de distribution électrique.

Le système de communication comprend un dispositif, appelé concentrateur de données DC (« data concentrator » en terminologie anglo-saxonne) 11. Le réseau PLCN 100 est destiné à permettre de connecter une pluralité de dispositifs nœuds au concentrateur de données DC 11. Les dispositifs nœuds que le réseau PLCN 100 vise à connecter au concentrateur de données DC 11 comprennent au moins un compteur centralisateur CM (« centralized meter » en terminologie anglo-saxonne). Dans la Fig. 1, le système de communication comprend trois compteurs centralisateurs 12A, 12B et 12C. Les dispositifs nœuds connectés au concentrateur de données DC 100 pourraient aussi comprendre des compteurs électriques intelligents (non représentés dans la Fig. 1).

Le réseau PLCN 100 permet ainsi d'établir des communications par courants porteurs en ligne (« powerline communications » en terminologie anglo-saxonne), afin que le concentrateur de données DC 11 puisse notamment communiquer avec les compteurs centralisateurs CM 12A, 12B et 12C. Les communications par courants porteurs en ligne via le réseau PLCN 100 sont préférentiellement conformes au protocole G3-PLC spécifié dans la recommandation ITU-T G.9903. En variante, les communications par courants porteurs en ligne via le réseau PLCN 100 sont préférentiellement conformes aux spécifications PRIME (« PoweRline Intelligent Metering Evolution » en terminologie anglo-saxonne, telles que définies dans le document normatif ITU G.9904).

Le système de communication comporte en outre une entité de gestion du système de gestion automatisée de comptage AMM qui est notamment en charge de traiter de manière centralisée les relevés de comptage. L'entité de gestion du système de gestion automatisée de comptage AMM, appelée simplement *entité de gestion* par la suite, prend la forme d'un serveur 15, ou d'un ensemble de serveurs, auquel le concentrateur de données DC 11 est connecté via un lien de communication 140. Le lien de communication 140 est un lien de communication sans-fil, par exemple de type GPRS (« General Packet Radio Service » en anglais), UMTS (« Universal Mobile Telecommunication System » en anglais) ou LTE (« Long-Term Evolution » en anglais). Le lien de communication 140 peut en variante être un lien de communication filaire.

Chaque compteur centralisateur CM 12A, 12B et 12C est relié à au moins une unité intermédiaire IU. Dans la Fig. 1, seules ont été représentées des unités IU 13A, 13B et 13C reliées au compteur centralisateur CM 12C.

Chaque unité intermédiaire IU 13A, 13B et 13C est reliée à un compteur à fluides, c'est-à-dire à un compteur d'eau et/ou un compteur à gaz. Par exemple, l'unité intermédiaire IU 13A (respectivement 13B et 13C) est reliée à un compteur à gaz G 14A (respectivement 14B et 14C) et à un compteur à eau W 16A (respectivement 16B et 16C). Comme tout compteur, chaque compteur à fluides (G 14A, 14B et 14C et W 16A, 16B et 16C) est en charge de compter des consommations (d'eau ou de gaz).

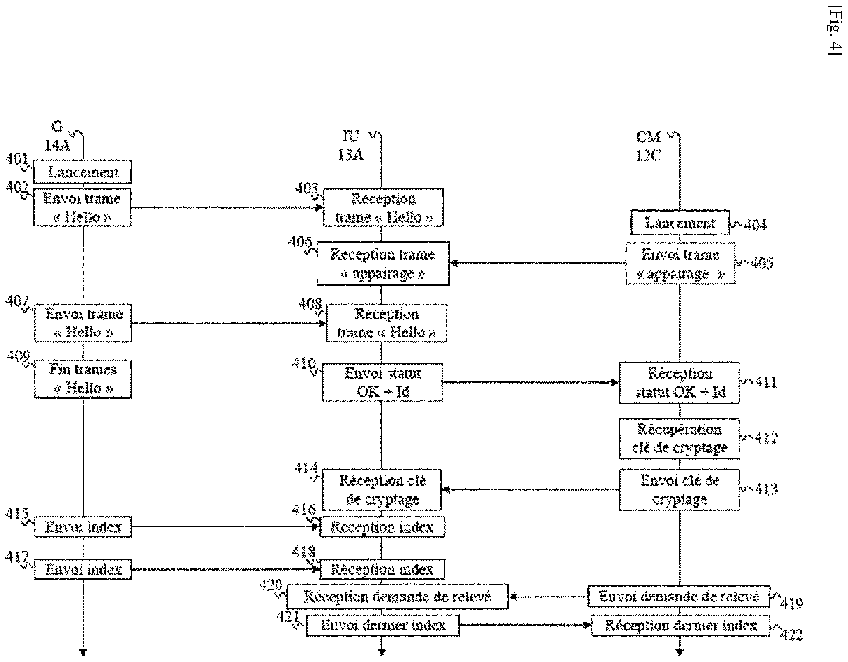

Selon un procédé que nous détaillons par la suite en relation avec les Figs. 4, 5, 6 et 7, chaque compteur à fluides transmet des informations représentatives de consommations aux unités intermédiaires 13A, 13B et 13C. Pour ce faire, il utilise un réseau de communication 102 entre les compteurs à fluides (G 14A, 14B et 14C et W 16A, 16B et 16C) et les unités intermédiaires IU (13A, 13B et 13C) basé sur le standard de communication WM-Bus.

Chaque unité intermédiaire IU se charge ensuite de faire remonter les informations représentatives de consommations de chaque compteur à fluides avec lequel elle est associée vers un compteur centralisateur. Pour ce faire, il utilise un réseau de communications par courants porteurs en ligne 101 reliant les unités intermédiaires IU aux compteurs centralisateurs CM. Le réseau de communication par courants porteurs en ligne 101 est distinct du réseau PLCN 100. Chaque unité intermédiaire IU est connectée, de manière logique, directement au compteur centralisateur CM avec lequel elle est associée. Par exemple, les unités intermédiaires IU 13A, 13B et 13C sont reliées, de manière logique, directement au compteur centralisateur CM 12C. Le réseau 101 reliant les unités intermédiaires IU 13A, 13B et 13C au compteur centralisateur CM 12C a ainsi une topologie en étoile (« star topology » en terminologie anglo-saxonne), alors que le réseau PLCN 100 a une topologie maillée (« mesh topology » en terminologie anglo-saxonne), comme dans le cadre du protocole G3-PLC, ou une topologie en arbre de recouvrement (« spanning tree topology » en terminologie anglo-saxonne), comme dans le cadre des spécifications PRIME.

Chaque unité intermédiaire IU sert donc de passerelle (« gateway » en terminologie anglo-saxonne) entre deux mondes : un premier monde des relevés de compteurs à fluides utilisant un réseau de communication sans fil basé, dans un mode de réalisation, sur le standard WM-Bus et un deuxième monde de relevé de compteurs électriques utilisant un réseau de communication par courants porteurs en ligne. Alors qu'un compteur à fluides n'est pas capable de communiquer directement avec le concentrateur de données DC 11 sur le réseau PLCN 100, l'ensemble formé par l'unité intermédiaire IU à laquelle ce compteur à fluides est rattaché et le compteur centralisateur CM auquel cette unité intermédiaire IU est rattachée forme un *système compteur centralisateur* capable de relayer des informations émanant du compteur à fluides vers le concentrateur de données DC 11 via le réseau de communication par courants porteurs en ligne 100. Par exemple, le compteur centralisateur CM 12C et l'unité intermédiaire 13A forment un premier système compteur centralisateur. Le compteur centralisateur CM 12C et l'unité intermédiaire 13B forment un deuxième système compteur centralisateur différent du premier système centralisateur, même s'ils ont le compteur centralisateur CM 12C en commun. Chaque système compteur centralisateur est associé à un compteur à fluides de type compteur à eau et/ou à un compteur à fluides de type compteur à gaz. Par exemple, le premier système compteur centralisateur est associé au compteur à gaz G 14A, et au compteur à eau W 16A. Une fois collectées par le compteur centralisateur CM 12C, les informations représentatives de consommations sont remontées vers le concentrateur de données DC 11 en utilisant le réseau PLCN 100, puis du concentrateur de données DC 11 à l'entité de gestion 15 en utilisant le réseau 140.

Chaque système compteur centralisateur, par exemple le système compteur centralisateur formé par le compteur centralisateur CM 12C et l'unité intermédiaire IU 13A, sert de dispositif mandataire (« proxy » en terminologie anglo-saxonne) pour au moins un compteur à fluides. Par exemple, le système compteur centralisateur formé par le compteur centralisateur CM 12C et l'unité intermédiaire IU 13A sert de dispositif mandataire pour le compteur à fluides G 14A. Du point de vue du réseau PLCN 100 et donc du concentrateur de données DC 11, les compteurs à fluides sont masqués par les systèmes compteurs centralisateurs.

En d'autres termes, chaque système compteur centralisateur émule, vis-à-vis du concentrateur de données DC 11, un comportement de compteur à fluides similaire au comportement d'un compteur électrique intelligent pour chaque compteur à fluides qui lui est rattaché.

Dans un mode de réalisation, de sorte à assurer que chaque compteur à fluides soit masqué du concentrateur de données DC 110, des bandes fréquentielles distinctes sont utilisées. Le fait que les compteurs à fluides soient masqués du concentrateur de données DC 110 permet avantageusement de simplifier le système de relevé de ces compteurs. En effet, les compteurs masqués n'échangent pas directement de données avec le concentrateur de données DC 110. Dès lors, qu'ils soient unidirectionnels ou bidirectionnels, ils n'ont pas à connaitre les clés de cryptage G3-PLC utilisées entre l'unité intermédiaire 13A et le compteur centralisateur 12C. Le compteur à fluides utilise sa propre clé de cryptage qu'il connait implicitement, pour dialoguer avec l'unité intermédiaire 13A. Les communications par courants porteurs en ligne sur le réseau PLCN 100 utilisent donc une première bande fréquentielle et les communications par courants porteurs en ligne sur le réseau 101 utilisent une seconde bande fréquentielle distincte de la première bande fréquentielle ne se chevauchant pas avec la première bande fréquentielle. Par exemple, le protocole G3-PLC et les spécifications PRIME définissent différentes bandes fréquentielles distinctes utilisables, notamment : une première bande fréquentielle CENELEC-A, qui va approximativement de 35 kHz à 91 kHz ; une seconde bande fréquentielle FCC, qui va approximativement de 150 kHz à 480 kHz ; une troisième bande fréquentielle CENELEC-B, qui va approximativement de 98 kHz à 122 kHz. Dans un mode de réalisation, les communications sur le réseau de communication par courants porteurs en ligne 100 utilisent la bande fréquentielle CENELEC-A et les communications sur le réseau de communication par courants porteurs en ligne 101 utilisent la bande fréquentielle FCC. Dans un mode de réalisation, le réseau de communication 102 est basé sur la technologie LoRa (marque déposée) (« Long Range » en terminologie anglo-saxonne).

Dans le mode de réalisation du système de communication décrit ci-dessus en relation avec la Fig. 1, chaque unité intermédiaire IU est séparée du compteur centralisateur CM auquel elle est rattachée. Dans ce mode de réalisation, chaque compteur centralisateur CM est destiné à équiper un complexe immobilier, tel qu'un immeuble ou un quartier résidentiel, dans lequel chaque local ou logement est équipé d'une unité intermédiaire IU qui relaie des informations représentatives de consommations émanant de compteurs à fluides vers ledit compteur centralisateur CM. Ce mode de réalisation permet d'avoir des compteurs centralisateurs CM ayant une complexité quasi équivalente à un compteur électrique intelligent classique et des unités intermédiaires IU peu complexes, chargées uniquement de relayer des informations représentatives de consommations de fluides émanant de compteurs à fluides. En effet, les unités intermédiaires IU ne comprennent que des éléments de base telles que des interfaces de communication WM-Bus et G3-PLC. Notamment, ces unités intermédiaires IU ne comprennent pas d'afficheur, ni de parties applicatives lesquelles sont prises en charge par les compteurs centralisateurs via des applications d'émulation des compteurs à fluides. De cette manière, le coût du système de communication est réduit par rapport à un système de communication classique dans lequel chaque logement et chaque local seraient équipés d'un compteur électrique intelligent. Cependant, certaines configurations de logements ou de locaux ne permettent pas de relier un même compteur centralisateur CM à plusieurs unités intermédiaires IU. C'est le cas notamment des logements ou locaux isolés. Malgré tout, un même besoin d'utiliser un réseau de communication par courants porteurs en ligne pour des systèmes de gestion automatisée de comptage AMM pour relever des compteurs à fluides existe pour ces logements ou ces locaux. Dans un mode de réalisation, chaque logement ou local est équipé d'un compteur électrique intelligent en charge d'effectuer des relevés de consommations électriques. Dans une première variante, chaque compteur à fluides dudit logement est associé à une unité intermédiaire IU en charge de relayer des informations représentatives de consommations vers le compteur électrique intelligent. Le compteur électrique intelligent est alors connecté à l'unité intermédiaire IU de la même manière qu'un compteur centralisateur CM est connecté à chaque unité intermédiaire IU. Dans une deuxième variante, le compteur électrique intelligent intègre l'unité intermédiaire IU, ou plus précisément, intègre toutes les fonctionnalités de l'unité intermédiaire IU. Dans ces deux variantes, le compteur électrique intelligent joue le même rôle que le compteur centralisateur CM 120.

On peut noter qu'un ensemble formé d'un compteur centralisateur CM et des unités intermédiaires IU qui lui sont rattachées, qu'elles soient intégrées ou pas dans le compteur centralisateur, forment un *système de relevé.*

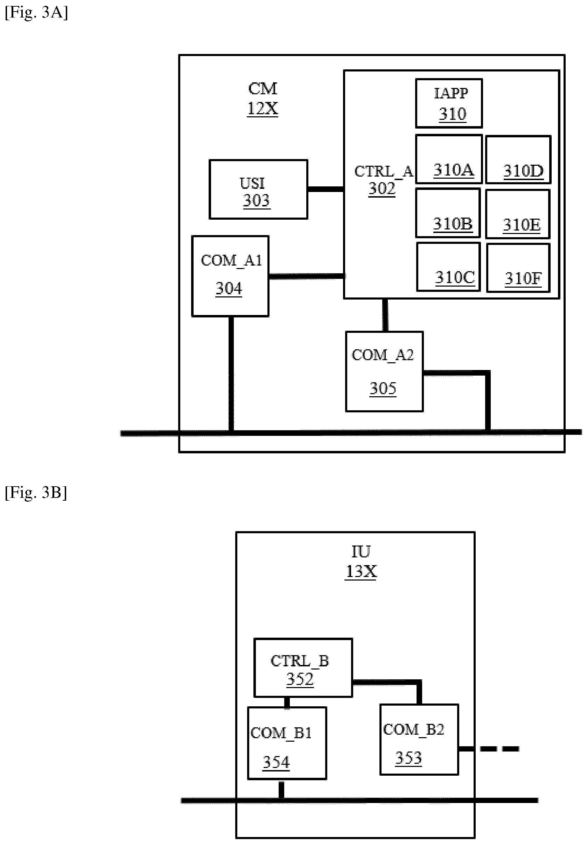

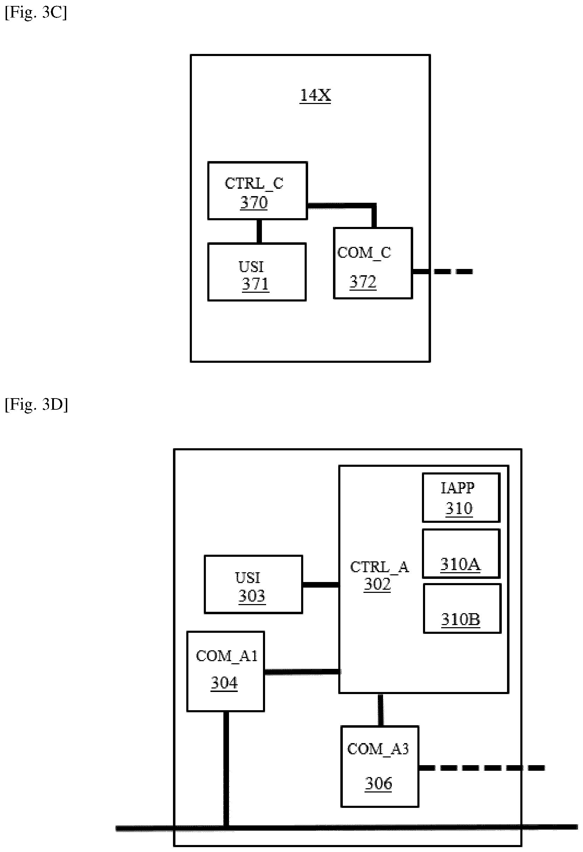

La **Fig. 2** illustre schématiquement un exemple d'agencement matériel d'un module de contrôle utilisé dans le système de communication de la Fig. 1. Un tel module de contrôle se retrouve dans chaque unité de traitement IU 13A, 13B et 13C, dans le compteur centralisateur CM 120, et dans chaque compteur à fluides G 14A, 14B et 14C et W 16A, 16B et 16C tel que détaillé ci-après en relation avec les Figs. 3A, 3B et 3C. Lorsque l'unité intermédiaire IU est intégrée dans un compteur électrique intelligent, le module de contrôle se retrouve dans le compteur électrique intelligent tel que décrit dans la Fig. 3D. L'exemple d'architecture matérielle présenté comporte, reliés par un bus de communication 210 : un processeur CPU 201 ; une mémoire vive RAM (« Random Access Memory » en terminologie anglo-saxonne) 202 ; une mémoire morte ROM (« Read Only Memory » en terminologie anglo-saxonne) 203 ou une mémoire Flash ; une unité de stockage ou un lecteur de support de stockage, tel qu'un lecteur de cartes SD (« Secure Digital » en terminologie anglo-saxonne) 204 ; et un ensemble d'interfaces d'entrée/sortie I/O 205. L'ensemble d'interfaces d'entrée/sortie I/O 205 permet au module de contrôle de communiquer avec d'autres composantes au sein d'un même dispositif, tel que détaillé ci-après en relation avec les Figs. 3A, 3B, 3C et 3D.

Le processeur CPU 201 est capable d'exécuter des instructions chargées dans la mémoire RAM 202 à partir de la mémoire ROM 203, d'une mémoire externe (telle qu'une carte SD), d'un support de stockage ou d'un réseau de communication. Lors de la mise sous tension, le processeur CPU 201 est capable de lire de la mémoire RAM 202 des instructions et de les exécuter. Ces instructions forment un programme d'ordinateur causant la mise en œuvre, par le processeur CPU 201, de tout ou partie des procédés et étapes décrits par la suite en relation avec les Figs. 4, 5, 6 et 7.

Ainsi, tout ou partie des procédés et étapes décrits en relation avec les Figs. 4, 5, 6 et 7 peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des procédés et étapes décrits en relation avec les Figs. 4, 5, 6 et 7 peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, le module de contrôle comporte de la circuiterie électronique adaptée et configurée pour implémenter les procédés et étapes décrits en relation avec les Figs. 4, 5, 6 et 7.

La **Fig. 3A** illustre schématiquement un exemple d'agencement d'un compteur centralisateur CM 12X.

Les compteurs centralisateurs CM 12A, 12B et 12C sont identiques au compteur centralisateur CM 12X décrit en relation avec la Fig. 3A. Le compteur centralisateur CM 12X comprend un module de contrôle CTRL_A 302 tel que décrit en relation avec la Fig. 2. Le module de contrôle CTRL_A 302 est en charge de superviser le fonctionnement du compteur centralisateur CM 12X.

Le compteur centralisateur CM 12X comporte en outre un premier module de communication COM_A1 304 destiné à permettre de communiquer par courants porteurs en ligne avec le concentrateur de données DC 11 via le réseau PLCN 100. Le premier module de communication COM_A1 304 agit donc dans la première bande fréquentielle. Le compteur centralisateur CM 12X comporte en outre un second module de communication COM_A2 305 destiné à permettre de communiquer par courants porteurs en ligne avec chaque unité intermédiaire IU rattachée audit compteur centralisateur CM 12X. Le second module de communication COM_A2 305 agit donc dans la seconde bande fréquentielle.

Le module de contrôle CTRL_A 302 implémente une application interne IAPP 310. L'application interne IAPP 310 est notamment en charge d'instancier une application d'émulation pour chaque compteur à fluides rattaché au compteur centralisateur CM 12X. Chaque application d'émulation est appelée par la suite *compteur à fluides virtuel.* De manière illustrative, lorsque le compteur centralisateur CM 12X est le compteur centralisateur CM 12C, comme six entités compteurs à fluides sont rattachées au compteur centralisateur CM 12C sur la Fig. 1, la Fig. 3A montre six applications compteurs à fluides virtuels 310A, 310B, 310C, 310D, 310E, 310F.

Le compteur centralisateur CM 12X peut comporter en outre un module d'interface utilisateur USI 303 adapté pour interagir avec des utilisateurs. Le module d'interface utilisateur USI 303 comprend par exemple deux boutons permettant chacun d'activer une procédure d'appariement entre un compteur à fluides et un système compteur centralisateur comprenant le compteur centralisateur 12X.

La **Fig. 3B** illustre schématiquement un agencement d'une unité intermédiaire IU 13X. Les unités intermédiaires IU 13A, 13B et 13C sont identiques à l'unité intermédiaire IU 13X. L'unité intermédiaire IU 13X comprend un module de contrôle CTRL_B 352 identique au module de contrôle décrit en relation avec la Fig. 2. Le module de contrôle CTRL_B 352 est en charge de superviser le fonctionnement de l'unité intermédiaire IU 13X.

L'unité intermédiaire IU 13X comprend en outre un premier module de communication COM_B1 354 destiné à permettre de communiquer par courants porteurs en ligne avec le compteur centralisateur CM auquel ladite unité intermédiaire 13X est rattachée. Le premier module de communication COM_B 1 354 agit dans la seconde bande fréquentielle. L'unité intermédiaire IU 13X comprend en outre un second module de communication COM_B2 353 destiné à permettre de communiquer selon le standard de communication WM-Bus avec chaque compteur à fluides avec lequel l'unité intermédiaire IU 13X est associée.

La **Fig. 3C** illustre schématiquement un agencement d'un compteur à fluides 14X. On retrouve un tel agencement dans les compteurs à fluides G 14A, 14B et 14C et W 16A, 16B et 16C.

Le compteur à fluides 14X comprend un module de contrôle CTRL_C 370 identique au module de contrôle décrit en relation avec la Fig. 2. Le module de contrôle CTRL_C 370 est en charge de superviser le fonctionnement du compteur à fluides 14X.

Le compteur à fluides 14X peut comporter en outre un module d'interface utilisateur USI 371 adapté pour interagir avec des utilisateurs. Le module d'interface utilisateur USI 371 est par exemple un bouton permettant d'activer une procédure d'appairage du compteur à fluides 14X et le système compteur centralisateur auquel le compteur à fluides est rattaché. Le compteur à fluides 14X comprend en outre un module de communication COM_C 372 destinée à permettre de communiquer selon le standard de communication WM-Bus avec l'unité intermédiaire IU avec laquelle le compteur à fluides est associé.

La **Fig. 3D** illustre schématiquement un exemple d'agencement d'un compteur électrique intelligent.

Le compteur électrique intelligent de la Fig. 3D est celui de la variante dans laquelle une unité intermédiaire IU est intégrée dans un compteur électrique intelligent. Le compteur électrique intelligent comprend les mêmes modules 302, 303 et 304 que le compteur centralisé CM 12X de la Fig. 3A. Comme dans le compteur centralisé CM 12X, le module de contrôle CTRL_A 302 implémente une application interne IAPP 310 qui instancie une application d'émulation pour chaque compteur à fluides rattachée au compteur électrique intelligent. Dans le contexte de cette variante, l'application interne IAPP 310 n'a à instancier au maximum que deux applications d'émulation, l'une pour un compteur à fluides de type compteur à eau et l'autre pour un compteur à fluides de type compteur à gaz. Par ailleurs, dans cette variante, puisque le compteur électrique intelligent communique directement avec chaque compteur à fluides, le deuxième module de communication COM_A2 305 est remplacé par un module de communication

COM_A3 306 permettant de communiquer selon le standard de communication WM-Bus avec chaque compteur à fluides avec lequel le compteur électrique intelligent est associé. La **Fig. 4** illustre schématiquement un premier mode de réalisation d'un procédé de relevé de compteurs à fluides.

Dans la Fig. 4, nous nous plaçons dans le contexte d'un compteur centralisateur CM séparé des unités intermédiaires IU avec lesquelles il est associé. Par ailleurs, dans la Fig. 4, nous prenons l'exemple des échanges entre le compteur centralisateur CM 12C et le compteur à fluides G 14A par l'intermédiaire de l'unité intermédiaire IU 13A. Le fonctionnement des échanges entre les autres compteurs à fluides (G 14B, G 14C, W 16A, W 16B et W 16C) et le compteur centralisateur CM 12C via les unités intermédiaires IU 13B et 13C est identique.

Tous les échanges entre le compteur centralisateur CM 12C et l'unité intermédiaire 13A utilisent des trames conformes au standard G3-PLC pour la couche physique et la couche liaison de données (« Medium Access Control (MAC) » en terminologie anglo-saxonne) selon le modèle OSI (« Open Systems Interconnection » en terminologie anglo-saxonne). Dans un mode de réalisation, la couche réseau selon le modèle OSI est conforme au protocole 6LoWPAN (« IPv6 Low power Wireless Personal Area Networks » en terminologie anglo-saxonne) tel que spécifié dans les documents normatifs RFC 4919 et 4944). Par la suite, les trames échangées entre le compteur centralisateur CM 12C et l'unité intermédiaire 13A sont appelées *trames G3-PLC.*

Tous les échanges entre l'unité intermédiaire 13A et le compteur à fluides 14A utilisent des trames conformes au standard WM-Bus pour la couche physique et la couche liaison de données. Dans un mode de réalisation, la couche réseau selon le modèle OSI est conforme au protocole 6LoWPAN. Les trames échangées entre l'unité intermédiaire 13A et le compteur à fluides 14A sont appelées par la suite *trames WM-Bus.*

Dans un mode de réalisation, la couche applicative des trames G3-PLC et WM-Bus est propriétaire et spécifique. Dans une trame G3-PLC ou WM-Bus, cette couche applicative prend la forme d'un octet de commande suivi d'une charge utile (« payload » en terminologie anglo-saxonne) comprenant un nombre d'octets variable. Nous appelons par la suite les trames G3-PLC ou WM-Bus allant dans le sens compteur à fluides G 14A vers compteur centralisateur CM 12C, respectivement trames G3-PLC montantes et trames WM-Bus montantes et les trames G3-PLC ou WM-Bus allant dans le sens compteur centralisateur CM 12C vers compteur à fluides G 14A, respectivement trames G3-PLC descendantes et trames WM-Bus descendantes.

Dans le cadre des trames WM-Bus descendantes et des trames G3-PLC descendantes, la couche applicative propriétaire définit les octets de commande et les charges utiles associées suivantes (on note que chaque octet de commande prend la forme d'une valeur hexadécimale) :
- « 0x00 » signifiant « réservé » associé à une charge utile vide ;
- « 0x01 » signifiant « mise à l'heure » associé à une charge utile de six octets. Le premier (respectivement le deuxième, le troisième, le quatrième, le cinquième et le sixième) représentant une valeur d'heure (respectivement de minute, de seconde, de jour, de mois et d'année).
- « 0x02 » signifiant « réservé » associé à une charge utile vide ;
- « 0x03 » signifiant « réservé » associé à une charge utile vide ;
- « 0x04 » signifiant « réservé » associé à une charge utile vide ;
- « 0x05 » signifiant « réservé » associé à une charge utile vide ;
- « 0x06 » signifiant « réservé » associé à une charge utile vide ;
- « 0x07 » signifiant « demande de relevé d'index de compteur à gaz » associé à une charge utile vide ;
- « 0x08 » signifiant « demande de relevé d'index de compteur à eau » associé à une charge utile vide ;
- « 0x09 » signifiant « demande d'appairage avec un compteur à gaz » associé à une charge utile vide ;
- « 0x0A » signifiant « demande d'appairage avec un compteur à eau » associé à une charge utile vide ;
- « 0x0B » signifiant « envoi d'une clé de cryptage pour compteur à gaz » associé à une charge utile de seize octets représentant une clé de cryptage pour compteur à gaz ;
- « 0x0C » signifiant « envoi d'une clé de cryptage pour compteur à eau » associé à une charge utile de seize octets représentant une clé de cryptage pour compteur à eau ;
- « 0x0D » à « 0x0F » signifiant « réservé » associé à une charge utile vide.

Dans le cadre des trames WM-Bus montantes et des trames G3-PLC montantes, la couche applicative propriétaire définit les octets de commande et les charges utiles associées suivantes :
- « 0x00 » signifiant « réservé » associé à une charge utile vide ;
- « 0x01 » signifiant « réservé » associé à une charge utile vide ;
- « 0x02 » signifiant « transmission d'une valeur d'index » associé à une charge utile comprenant un octet représentatif d'un type d'index, « 4 » octets de valeur d'index et « 6 » octets d'horodatage (heure, minute, seconde, jour, mois, année). L'octet représentatif d'un type d'index prend une valeur en octet égale à « 0x01 » lorsqu'il s'agit d'un index d'un compteur à gaz, et une valeur en octet égale à « 0x02 » lorsqu'il s'agit d'un index d'un compteur à eau. Les autres valeurs possibles de l'octet représentatif d'un type d'index signifient « réservé ».
- « 0x03 » signifiant « statut » associé à une charge utile de deux octets. Dans ces deux octets, les bits « 0 » à « 7 » et « 10 » à « 15 » sont réservés pour de futures utilisations. Dans l'invention, seules les valeurs des bits « 8 » et « 9 » sont utilisées, le bit « 8 » signifiant « panne de gaz » et le bit « 9 » signifiant « panne d'eau ».
- « 0x04 » signifiant « statut d'appairage » associé à une charge utile de cinq octets. Le premier octet donne une valeur hexadécimale représentative d'un type d'appairage : la valeur « 0x00 » signifie « appairage gaz réussi » ; la valeur « 0x01 » signifie « échec appairage gaz » ; la valeur « 0x02 » signifie « appairage eau réussi » ; la valeur « 0x03 » signifie « échec appairage eau ». Les autres valeurs possibles de cet octet sont réservées pour d'autres utilisations. Les quatre octets suivants représentent un identifiant du compteur à fluides.
- les valeurs « 0x05 » à « 0xFF » signifient « réservé » associé à une charge utile vide.

La Fig. 4 ne représente pas les échanges entre le compteur centralisateur CM 12C et le concentrateur de données DC 11. Comme nous l'avons vu plus haut, tous les échanges entre le compteur centralisateur CM 12C et le concentrateur de données 11 utilisent des trames conformes au standard G3-PLC pour la couche physique et la couche liaison de données. Dans un mode de réalisation, la couche réseau selon le modèle OSI est conforme au protocole 6LoWPAN. Les trames échangées entre le compteur centralisateur CM 12C et le concentrateur de données DC 11 sont appelées par la suite *trames DC.* Dans un mode de réalisation, la couche applicative des trames DC est conforme au standard DLMS/COSEM (« Device Language Message Spécification / Companion Spécification for Energy Metering » en terminologie anglo-saxonne), tel que décrit dans le document normatif IEC 62056-5-3 et dans la 12e édition du document « Bluebook : COSEM Interface Classes and OBIS Object Identification System » édité par le DLMS User Association.

Dans le mode de réalisation de la Fig. 4, le compteur à fluides G 14A est unidirectionnel, c'est-à-dire qu'il ne peut qu'émettre des trames. Le compteur à fluides G 14A ne peut donc pas recevoir des trames.

Dans une étape 401, un utilisateur presse le bouton de l'interface utilisateur USI 371 du compteur à fluides G 14A. Le module de contrôle CTRL_C 370 du compteur à fluides G 14A capte cette action sur le bouton.

Dans une étape 402, le module de contrôle CTRL_C 370 provoque l'envoi par le module de communication COM_C 372 de messages de signalisation pendant une période prédéfinie, chaque message de signalisation prenant la forme d'une trame WM-Bus de signalisation, c'est-à-dire une trame conforme au standard WM-Bus comprenant un symbole SND-IR tel que défini dans la table 24 du standard ,dite *trame WM-Bus hello.* Par exemple, la période prédéfinie dure quinze minutes.

Dans une étape 403, l'unité intermédiaire IU 13A reçoit au moins une trame WM-Bus hello par l'intermédiaire de son module de communication COM_B2 353.

Dans une étape 404 se produisant de préférence entre l'étape de lancement 401 et la fin de la période prédéfinie, l'utilisateur appuie sur l'un des boutons de l'interface utilisateur USI 303 du compteur centralisateur CM 12C. Cette manipulation du bouton est alors captée par le module de contrôle CTRL_A 302 qui provoque, lors d'une étape 405, un envoi par le module de communication COM_A2 305, d'une trame G3-PLC descendante d'appairage, c'est-à-dire d'une trame G3-PLC descendante dans laquelle l'octet de commande est à la valeur « 0x09 » ou « 0x10 ». On suppose ici que l'un des boutons provoque un appairage avec un compteur à gaz et que l'autre bouton provoque un appairage avec un compteur à eau.

Dans une étape 406, l'unité intermédiaire IU 13A reçoit la trame descendante d'appairage par l'intermédiaire de son module de communication COM_B1 354. A partir de cette réception, le module de contrôle CTRL_B 352 sait qu'un appairage a été demandé par un compteur centralisateur CM. Ainsi, alors que jusque-là le module de contrôle CTRL_B 352 ne prenait pas en compte les réceptions éventuelles de trames WM-Bus montantes hello, il sait maintenant qu'une réception d'une trame WM-Bus montante hello doit provoquer un appairage.

Dans une étape 407, le compteur à fluides G 14A, qui est toujours dans la période prédéfinie, envoie une nouvelle trame WM-Bus montante hello par l'intermédiaire de son module de communication COM_C 372.

Cette trame WM-Bus montante hello est reçue par le module de communication COM_B2 353 de l'unité intermédiaire 13A lors d'une étape 408.

Lors d'une étape 409, la période prédéfinie se termine et le compteur à fluides G 14A met fin aux envois de trames WM-Bus montantes.

La réception d'une trame WM-Bus montante hello par l'unité intermédiaire IU 13A provoque un envoi d'une trame G3-PLC montante dite *d'appairage réussi*, c'est-à-dire comprenant un octet de commande à la valeur « 0x04 », un premier octet de charge utile à la valeur « 0x00 » ou « 0x02 » et quatre octets d'identifiant du compteur à fluides G 14A. On suppose ici que l'unité intermédiaire IU 13A connaît l'identifiant de chaque compteur à fluides qui lui est connecté.

Dans une étape 411, le module de communication COM_A2 305 reçoit la trame G3-PLC montante d'appairage réussi.

La réception de la trame G3-PLC montante d'appairage réussi par le compteur centralisateur CM 12C provoque l'envoi, lors d'une étape 412, d'une demande de clé de cryptage pour le compteur à fluides G 14A à destination de l'entité de gestion 15. Cette demande se fait via le concentrateur de données DC 11. La demande de clé de cryptage comprend l'identifiant du compteur à fluides G 14A afin que l'entité de gestion 15 transmette une clé de cryptage correspondant à ce compteur à fluides. Une fois récupérée, la clé de cryptage est transmise à l'unité intermédiaire IU 13A lors d'une étape 413. Pour ce faire, le compteur centralisateur CM 12C envoie une trame G3-PLC descendante dite *de transport de clé de cryptage.* La trame G3-PLC descendante de transport de clé de cryptage comprend un octet de commande à la valeur « 0x0B » ou à la valeur « 0x0C » et seize octets comprenant la clé de cryptage. Lors de l'étape 413, le module de contrôle CTRL_A 302 instancie une application d'émulation émulant un compteur à fluides virtuel apte à communiquer directement avec le concentrateur de données 11 pour le compte du compteur à fluides G 14A.

Dans une étape 414, l'unité intermédiaire IU 13A reçoit la trame G3-PLC descendante de transport de clé de cryptage. Dès réception de cette trame, le module de contrôle CTRL_B 352 sait que toutes les communications entre l'unité intermédiaire IU 13A et le compteur à fluides G 14A doivent être cryptées en utilisant la clé de cryptage du compteur à fluides G 14A reçue.

L'étape 414 met fin à une phase d'appariement entre le système compteur centralisateur comprenant le compteur centralisateur CM 12C et l'unité intermédiaire IU 13A et le compteur à fluides G 14A. Le module de contrôle CTRL_A 302 considère donc que le compteur centralisateur CM 12C (et donc le système compteur centralisateur correspondant) est apparié avec le compteur à fluides G 14A lorsqu'il reçoit au moins une trame de signalisation (*i.e.* une trame WM-Bus montante hello) de la part dudit compteur à fluides G 14A et, dans un mode de réalisation, qu'il a obtenu la clé de cryptage correspondant audit compteur à fluides G14A.

Suite à cette phase d'appariement, une phase de transmission d'index peut débuter.

Lors de cette phase, le compteur à fluides G 14A envoie des trames WM-Bus montantes, dites *de transmission d'index* à intervalles prédéfinis réguliers, par exemple, tous les jours, et se met en veille entre chaque envoi. Chaque trame WM-Bus montante de transmission d'index correspond à une trame conforme au standard WM-Bus comprenant un symbole SND-NR tel que défini dans la table 24 du standard. Le type d'index, l'index et l'information d'horodatage constituent une information représentative d'un relevé de consommation de fluides. Dans la Fig. 4, nous avons représenté deux envois de trames WM-Bus montantes de transmission d'index lors d'étapes 415 et 417.

Ces deux trames WM-Bus montantes de transmission d'index sont reçues par l'unité intermédiaire IU 13A respectivement lors d'étapes 416 et 418. Lors d'une réception d'une trame WM-Bus montante de transmission d'index, le module de contrôle CTRL_B 352 stocke la valeur des informations représentatives de consommation de fluides contenue dans cette trame.

Dans une étape 419, le module de contrôle CTRL_A du compteur centralisateur CM 12C déclenche un relevé du compteur à fluides G 14A. Pour ce faire, il envoie une trame G3-PLC descendante dite *de relevé* à l'unité intermédiaire IU 13A. Chaque trame G3-PLC descendante de relevé comprend un octet de commande à la valeur « 0x07 » ou à la valeur « 0x08 » et une charge utile vide.

Lors d'une étape 420, l'unité intermédiaire IU 13A reçoit la trame G3-PLC descendante de relevé. Suite à la réception de cette trame, le module de contrôle CTRL_B 352 récupère la dernière valeur d'information représentative de consommation de fluides qu'il a reçue pour le compteur à fluides concerné par la trame G3-PLC descendante de relevé.

Lors d'une étape 421, l'unité intermédiaire IU 13A envoie une trame G3-PLC montante dite *de transmission d'index.* La trame G3-PLC montante de transmission d'index comprend un octet de commande à la valeur « 0x02 » et une charge utile comprenant un octet de type d'index à la valeur « 0x01 » ou « 0x02 », quatre octets correspondant à la dernière valeur d'index et six octets comprenant l'information d'horodatage correspondant audit dernier index. Le contenu de cette trame est crypté en utilisant la clé de cryptage reçue lors de l'étape 414.

Lors d'une étape 422, le compteur centralisateur CM 12C reçoit la trame G3-PLC montante de transmission d'index. Le compteur à fluides virtuel émulant le compteur à fluides G 14A se charge ensuite de retransmettre le contenu de la trame G3-PLC montante de transmission d'index, *i.e.* l'index et l'information d'horodatage, à l'entité de gestion 15 via le concentrateur de données DC 11.

On note que, si aucune trame WM-Bus montante n'est reçue par l'unité intermédiaire IU 13A après une durée prédéfinie, par exemple de quinze minutes, suivant la réception de la trame G3-PLC descendante d'appairage lors de l'étape 406, le module de contrôle CTRL_B 352 provoque un envoi par le module de communication COM_B1 354, d'une trame G3-PLC montante dite « d'échec d'appairage » au compteur centralisateur CM 12C. La trame G3-PLC montante d'échec d'appairage comprend un octet de commande égale à « 0x04 », un premier octet de charge utile égale à « 0x01 » ou « 0x03 » et quatre octets d'identifiant du compteur à fluides G 14A. Lors d'une réception d'une trame G3-PLC montante d'échec d'appairage, le compteur centralisateur CM 12C transmet une information à destination de l'entité de gestion 15 via le concentrateur de données DC 11 informant l'entité de gestion 15 qu'une intervention sur le compteur à fluides G 14A est nécessaire.

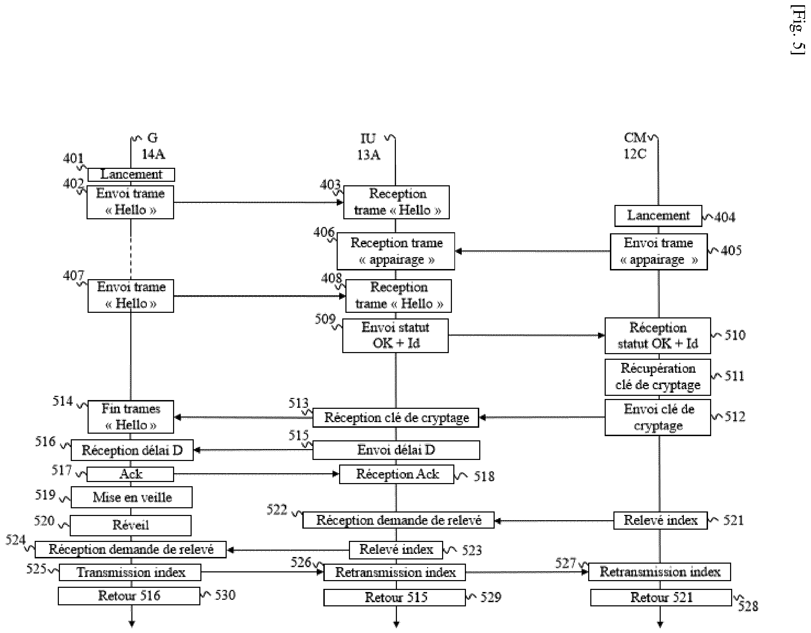

La **Fig. 5** illustre schématiquement un deuxième mode de réalisation d'un procédé de relevé de compteurs à fluides.

Dans le mode de réalisation de la Fig. 5, le compteur à fluides G 14A est bidirectionnel, c'est-à-dire qu'il peut émettre et recevoir des trames.

Le procédé de la Fig. 5 reprend les étapes 401 à 408 à l'identique. L'étape 408 est suivie d'étapes 509, 510, 511 et 512 respectivement identiques aux étapes 410, 411, 412 et 413. L'étape 512 est suivie d'une étape 513 au cours de laquelle l'unité intermédiaire IU 13A reçoit la trame G3-PLC descendante de transport de clé de cryptage du compteur G 14A. Dès réception de cette trame, le module de contrôle CTRL_B 352 sait que toutes les communications entre l'unité intermédiaire IU 13A et le compteur à fluides G 14A doivent être cryptées en utilisant la clé de cryptage reçue. Lors de l'étape 513, l'unité intermédiaire IU 13A transmet une trame WM-Bus descendante dite *d'appariement réussi* au compteur à fluides G 14A. La trame WM-Bus descendante d'appariement réussi à une trame conforme au standard WM-Bus comprenant un symbole CNF-IR tel que défini dans la table 25 du standard.

Dans une étape 514, le compteur à fluides G 14A reçoit la trame WM-Bus descendante d'appariement réussi. La réception de cette trame met fin à l'envoi des trames WM-Bus montantes hello par le compteur à fluides G 14A. C'est donc l'étape 514 qui met fin à la phase d'appariement entre le système compteur centralisateur comprenant le compteur centralisateur CM 12C et l'unité intermédiaire IU 13A et le compteur à fluides G 14A. Suite à cette phase d'appariement, une phase de transmission d'index peut débuter.

La phase de transmission d'index fait suite à la phase d'appariement.

Dans une étape 515, le module de contrôle CTRL_B 352 provoque un envoi par le module de communication COM_B2 353 d'un délai prédéfini *D* dans une trame WM-Bus descendante comprenant un symbole SND-UD tel que défini dans le tableau 24 du standard et « 4 » octets représentatifs du délai prédéfini *D* exprimés en secondes restantes avant le prochain réveil. Le délai prédéfini *D* est par exemple égal à « 24 » heures.

Dans une étape 516, le compteur à fluides G 14A reçoit la trame WM-Bus descendante contenant le délai prédéfini *D* par l'intermédiaire de son module de communication COM_C 372. Le délai prédéfini est utilisé par le module de contrôle CTRL_C 370 pour fixer un temps de mise en veille du compteur à fluides G 14A suite à un relevé d'index réussi.

Dans une étape 517, le compteur à fluides G 14A transmet une trame WM-Bus montante dite *d'acquittement* à l'unité intermédiaire IU 13A pour acquitter la réception du délai prédéfini D. La trame WM-Bus montante d'acquittement correspond à une trame conforme au standard WM-Bus comprenant un symbole ACK tel que défini dans la table 25 du standard.

Dans une étape 518, l'unité intermédiaire IU 13A reçoit la trame WM-Bus montante d'acquittement.

On note que si l'unité intermédiaire IU 13A ne reçoit pas de trame WM-Bus montante d'acquittement au bout d'une durée *D_{Timeout},* par exemple égale à « 10 » secondes, suivant l'exécution de l'étape 515, il renvoie une trame WM-Bus descendante contenant le délai prédéfini *D.* Si au bout de *K* tentatives (par exemple *K*=3), aucune trame WM-Bus montante d'acquittement n'est reçue, l'unité intermédiaire considère qu'il faut réappairer le compteur à fluides G 14A et en informe l'entité de gestion 15.

Dans une étape 519, suite à l'envoi de la trame WM-Bus montante d'acquittement, le module de contrôle CTRL_C 370 met le compteur à fluides G 14A en veille pendant la durée prédéfinie *D.* A la fin de la durée prédéfinie *D,* le module de contrôle CTRL_C 370 réveille le compteur à fluides G 14A lors d'une étape 520. Dans un mode de réalisation, à partir de ce réveil, le compteur à fluides G 14A reste éveillé jusqu'à recevoir une demande de relevé d'index.

Dans une étape 521, le module de contrôle CTRL_A 302 du compteur centralisateur CM 12C provoque l'envoi d'une trame G3-PLC descendante de relevé à l'unité intermédiaire IU 13A.

Dans une étape 522, l'unité intermédiaire IU 13A reçoit la trame G3-PLC descendante de relevé. Le module de contrôle CTRL_B 352 sait que le compteur à fluides peut être en mode de veille mais sait aussi, puisqu'il a fixé le délai prédéfini *D*, combien de temps au maximum le compteur à fluides G 14A peut rester en mode de veille. Le module de contrôle CTRL_B 352 en déduit alors quand envoyer, lors d'une étape 523, une trame WM-Bus descendante dite *de relevé.* On dit alors que l'unité intermédiaire IU 13A et le compteur à fluides G 14A sont synchronisés. La trame WM-Bus descendante de relevé correspond à une trame conforme au standard WM-Bus comprenant un symbole REQ-UD2 tel que défini dans le tableau 24 du standard.

Dans une étape 524, alors qu'il est en période de réveil, le compteur à fluides G 14A reçoit la trame WM-Bus descendante de relevé.

Dans une étape 525, le module de contrôle CTRL_C 370 provoque un envoi par le module de communication COM_C 372 d'une trame WM-Bus montante de transmission d'index. La trame WM-Bus montante de transmission d'index correspond à une trame conforme au standard WM-Bus comprenant un symbole RSP-UD tel que défini dans le tableau 25 du Standard et comprenant « 4 » octets représentatifs de l'index du compteur à fluides G 14A.

Dans une étape 526, l'unité intermédiaire IU 13A reçoit la trame WM-Bus montante de transmission d'index et retransmet son contenu dans une trame G3-PLC montante de transmission d'index au compteur centralisateur CM 12C. Dans une étape 527, le compteur centralisateur CM 12C reçoit la trame G3-PLC montante de transmission d'index. Le compteur à fluides virtuel émulant le compteur à fluides G 14A se charge ensuite de retransmettre le contenu de la trame G3-PLC montante de transmission d'index, *i.e.* l'index et l'information d'horodatage, à l'entité de gestion 15 via le concentrateur de données DC 11.

Dans une étape 528, le module de contrôle CTRL_A 302 retourne à l'étape 521 pour renvoyer une trame G3-PLC descendante de relevé.

Dans une étape 529, le module de contrôle CTRL_B 352 retourne à l'étape 515 pour renvoyer un délai prédéfini *D.*

Dans une étape 530, le module de contrôle CTRL_C 370 retourne à l'étape 516 et se met en attente de réception d'un délai prédéfini *D.*

On note que, là encore, si aucune trame WM-Bus montante n'est reçue par l'unité intermédiaire IU 13A après une durée prédéfinie suivant la réception de la trame G3-PLC descendante d'appairage lors de l'étape 406, le module de contrôle CTRL_B 352 provoque un envoi par le module de communication COM_B1 354, d'une trame G3-PLC montante dite « d'échec d'appairage » au compteur centralisateur CM 12C. Lors d'une réception d'une trame G3-PLC montante d'échec d'appairage, le compteur centralisateur CM 12C transmet une information à destination de l'entité de gestion 15 via le concentrateur de données DC 11 informant l'entité de gestion 15 qu'une intervention sur le compteur à fluides G 14A est nécessaire.

Dans un mode de réalisation, l'unité intermédiaire IU 13A n'envoie qu'une fois un délai prédéfini *D.* Dans ce mode de réalisation, lors de l'étape 529, le module de contrôle CTRL_B 352 retourne à l'étape 523. Par ailleurs, le module de contrôle CTRL_C 370 met le compteur
à fluides G 14A en veille (étape 519) pendant le délai prédéfini *D* à la suite de l'étape 525 sans attendre la réception d'un nouveau délai prédéfini *D.*

Dans un mode de réalisation, l'unité intermédiaire IU 13A et le compteur à fluides G 14A sont désynchronisés, même si l'unité intermédiaire IU 13A a fourni une durée prédéfinie *D* au compteur à fluides G 14A. Dans ce mode de réalisation, suite à la réception de la trame G3-PLC descendante de relevé lors de l'étape 522, le module de contrôle CTRL_B 352 provoque des envois à intervalles réguliers de trames WM-Bus descendantes de relevé jusqu'à réception d'une première trame WM-Bus montante de transmission d'index. La transmission des trames WM-Bus descendantes de relevé cesse donc dès réception de la première trame WM-Bus montante de transmission d'index.

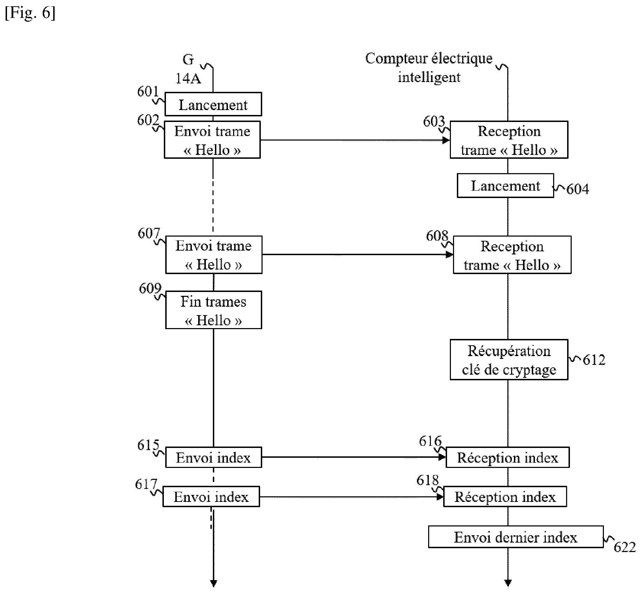

La **Fig. 6** illustre schématiquement un troisième mode de réalisation d'un procédé de relevé de compteur à fluides.

Le contexte de la Fig. 6 est celui d'un compteur électronique intelligent intégrant une unité intermédiaire IU. Dans ce cas, le compteur électrique intelligent forme à lui tout seul le système compteur centralisateur. Dans la Fig. 6, le compteur à fluides est unidirectionnel. Dans une étape 401, identique à l'étape 401, un utilisateur presse le bouton de l'interface utilisateur USI 371 du compteur à fluides G 14A. Le module de contrôle CTRL_C 370 du compteur à fluides G 14A capte cette action sur le bouton.

Dans une étape 602, identique à l'étape 402, le module de contrôle CTRL_C 370 provoque l'envoi par le module de communication COM_C 372 d'une pluralité de trames WM-Bus de signalisation dites *trames WM-Bus hello* pendant une période prédéfinie. Par exemple, la période prédéfinie dure quinze minutes.

Dans une étape 603, le compteur électrique intelligent reçoit au moins une trame WM-Bus hello par l'intermédiaire de son module de communication COM_A3 306.

Dans une étape 604 se produisant de préférence entre l'étape de lancement 601 et la fin de la période prédéfinie, l'utilisateur appuie sur l'un des boutons de l'interface utilisateur USI 303 du compteur électrique intelligent. Cette manipulation du bouton est alors captée par le module de contrôle CTRL_A 302 qui se met en attente d'une réception d'une trame WM-Bus hello.

Dans une étape 607, identique à l'étape 407, le compteur à fluides G 14A, qui est toujours dans la période prédéfinie, envoie une nouvelle trame WM-Bus montante hello par l'intermédiaire de son module de communication COM_C 372.

Cette trame WM-Bus montante hello est reçue par le module de communication COM_A3 306 du compteur électrique intelligent lors d'une étape 608.

La réception de cette dernière trame WM-Bus montante hello provoque l'envoi, lors d'une étape 612, d'une demande de clé de cryptage pour le compteur à fluides G 14A à destination de l'entité de gestion 15. Cette demande se fait via le concentrateur de données DC 11. Lors de l'étape 612, le module de contrôle CTRL_A 302 instancie une application d'émulation émulant un compteur à fluides virtuel apte à communiquer directement avec le concentrateur de données 11 pour le compteur à fluides G 14A.

Lors d'une étape 609, qui est identique à l'étape 409, la période prédéfinie se termine et le compteur à fluides G 14A met fin aux envois de trames WM-Bus montantes.

L'étape 609 met fin à la phase d'appariement entre le système compteur centralisateur comprenant le compteur centralisateur CM 12C et l'unité intermédiaire IU 13A et le compteur à fluides G 14A.

Suite à cette phase d'appariement, la phase de transfert d'index peut débuter.

Lors de cette phase, le compteur à fluides G 14A transmet des trames WM-Bus montantes de transmission d'index à intervalles réguliers, par exemple, tous les jours. Dans la Fig. 6, nous avons représenté deux envois de trames WM-Bus montantes de transmission d'index lors d'étapes 615 et 617.

Ces deux trames WM-Bus montantes de transmission d'index sont reçues par le compteur électrique intelligent respectivement lors d'étapes 616 et 618. Lors d'une réception d'une trame WM-Bus montante de transmission d'index, le module de contrôle CTRL_A 302 stocke les informations représentatives d'un relevé de consommation de fluides contenues dans cette trame.

Lors d'une étape 622, le compteur à fluides virtuel émulant le compteur à fluides G 14A se charge de retransmettre le dernier index reçu par le compteur électrique intelligent et l'information d'horodatage correspondante à l'entité de gestion 15 via le concentrateur de données DC 11.

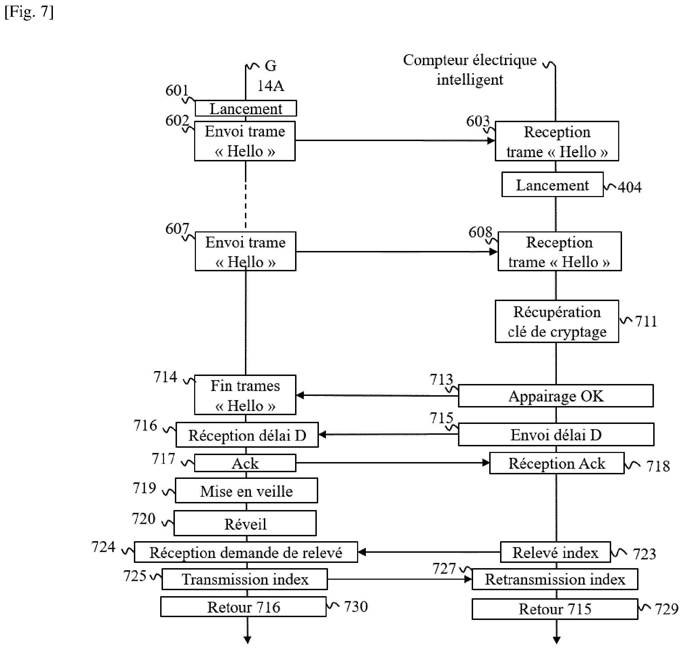

La **Fig. 7** illustre schématiquement un quatrième mode de réalisation d'un procédé de relevé de compteurs à fluides.

Le contexte de la Fig. 7 est celui d'un compteur électronique intelligent intégrant une unité intermédiaire IU. Dans ce cas, le compteur électrique intelligent forme à lui tout seul le système compteur centralisateur. Dans la Fig. 7, le compteur à fluides est bidirectionnel. Le procédé de la Fig. 7 reprend les étapes 601, 602, 603, 607 et 608 à l'identique. L'étape 608 est suivie d'une étape 711 identique à l'étape 612. L'étape 711 est suivie d'une étape 713 au cours de laquelle le compteur électrique intelligent transmet une trame WM-Bus descendante d'appariement réussi au compteur à fluides G 14A.

Dans une étape 714, identique à l'étape 514, le compteur à fluides G 14A reçoit la trame WM-Bus descendante d'appariement réussi. La réception de cette trame met fin à l'envoi des trames WM-Bus montantes hello par le compteur à fluides G 14A.

L'étape 714 met donc fin à la phase d'appariement entre le compteur électrique intelligent et le compteur à fluides G 14A.

Suite à cette phase d'appariement, la phase de transfert d'index peut débuter.

Dans une étape 715, le module de contrôle CTRL_A 302 provoque un envoi par le module de communication COM_A3 306 d'un délai prédéfini *D* dans une trame WM-Bus descendante telle que décrite dans l'étape 515. Le délai prédéfini D est par exemple égal à « 24 » heures.

Dans une étape 716, le compteur à fluides G 14A reçoit la trame WM-Bus descendante contenant le délai prédéfini *D* par l'intermédiaire de son module de communication COM_C 372. Le délai prédéfini est utilisé par le module de contrôle CTRL_C 370 pour fixer un temps de mise en veille du compteur à fluides G 14A suite à un relevé d'index réussi.

Dans une étape 717, identique à l'étape 517, le compteur à fluides G 14A transmet une trame WM-Bus montante d'acquittement à l'unité intermédiaire IU 13A pour acquitter la réception du délai prédéfini *D.*

Dans une étape 718, le compteur électrique intelligent reçoit la trame WM-Bus montante d'acquittement telle que décrite dans l'étape 517.

Dans une étape 719, identique à l'étape 519, suite à l'envoi de la trame WM-Bus montante d'acquittement, le module de contrôle CTRL_C 370 met le compteur à fluides G 14A en veille pendant la durée prédéfinie *D.* A la fin de la durée prédéfinie *D,* le module de contrôle CTRL_C 370 réveille le compteur à fluides G 14A lors d'une étape 720, identique à l'étape 520. Dans un mode de réalisation, à partir de ce réveil, le compteur à fluides G 14A reste éveillé jusqu'à recevoir une demande de relevé d'index.

Dans une étape 723, le compteur électrique intelligent envoie une trame WM-Bus descendante de relevé au compteur à fluides G 14A. On suppose ici que le compteur électrique intelligent et le compteur à fluides G 14A sont synchronisés.

Dans une étape 724, identique à l'étape 524, le compteur à fluides G 14A reçoit la trame WM-Bus descendante de relevé.

Dans une étape 725, identique à l'étape 525, le module de contrôle CTRL_C 370 provoque un envoi par le module de communication COM_C 372 d'une trame WM-Bus montante de transmission d'index.

Dans une étape 727, le compteur électrique intelligent reçoit la trame WM-Bus montante de transmission d'index. Le compteur à fluides virtuel émulant le compteur à fluides G 14A se charge ensuite de retransmettre le contenu de la trame WM-Bus montante de transmission d'index, *i.e.* l'index et l'information d'horodatage, à l'entité de gestion 15 via le concentrateur de données DC 11.

Dans une étape 729, le module de contrôle CTRL_A 302 retourne à l'étape 715 pour renvoyer un délai prédéfini *D* au compteur à fluides G 14A.

Dans une étape 730, le module de contrôle CTRL_C 370 retourne à l'étape 716 et se met en attente de réception d'un délai prédéfini *D.*

## Revendications

1. Procédé de relevé automatisé à distance d'un compteur à fluides exécuté dans un système de gestion automatisée de comptage dans le cadre d'un service de distribution de fluides, comprenant un compteur à fluides (14A) et un système, dit système compteur centralisateur, le compteur à fluides (14A) étant apte à transmettre des trames conformes à un standard de communication sans fils au système compteur centralisateur, le système compteur centralisateur étant apte à recevoir lesdites trames et à communiquer par courants porteurs en ligne avec un concentrateur de données (11) dans une première bande fréquentielle via un premier réseau de type réseau de communication par courants porteurs en ligne (100), ledit concentrateur de données communiquant avec une entité de gestion (15) du système de gestion automatisée de comptage via un deuxième réseau, **caractérisé en ce que**, le système compteur centralisateur comprenant un compteur centralisateur (12C) et une unité intermédiaire (13A) associés audit compteur à fluides, le compteur centralisateur et l'unité intermédiaire étant deux dispositifs séparés aptes à communiquer entre eux par courants porteurs en ligne dans une deuxième bande fréquentielle ne chevauchant pas ladite première bande fréquentielle via un troisième réseau de type réseau de communication par courants porteurs en ligne (101) distinct dudit premier réseau (100), le procédé comprend :
- effectuer (401, 402, 403, 404, 405, 406, 407, 408, 409, 410, 411, 412, 413, 414) une phase d'appariement entre le système compteur centralisateur et le compteur à fluides dans laquelle l'unité intermédiaire reçoit chaque trame de signalisation envoyée par le compteur à fluides et considère que le système compteur centralisateur et le compteur à fluides sont appariés lorsqu'il reçoit une trame de signalisation suite à une réception d'une trame contenant une information représentative d'une demande d'appairage de la part du compteur centralisateur et, lorsqu'il est apparié avec le compteur à fluides, instancie une application d'émulation émulant un compteur à fluides virtuel apte à communiquer directement avec le concentrateur de données (11) pour le compte dudit compteur à fluides ;
- effectuer une phase de transmission d'index durant laquelle, le système compteur centralisateur reçoit des trames en provenance du compteur à fluides comprenant chacune des informations représentatives d'un relevé de consommation de fluides, le compteur à fluides virtuel se chargeant de retransmettre lesdites informations représentatives d'un relevé de consommation de fluides à l'entité de gestion (15) via le concentrateur de données (11).

2. Procédé selon la revendication 1, **caractérisé en ce que** la phase d'appariement comprend en outre, suite à la réception par le système compteur centralisateur d'une trame de signalisation parmi une pluralité de trames de signalisation transmises par le compteur à fluides pendant la phase d'appariement, transmettre (513) depuis le système compteur centralisateur au compteur à fluides, une trame comprenant une information représentative d'un appariement réussi, la réception de la trame comprenant l'information représentative de l'appariement réussi par le compteur à fluides mettant fin à la transmission de la pluralité de trames de signalisation.

3. Procédé selon la revendication 2, **caractérisé en ce que**, pendant la phase de transmission d'index, le système compteur centralisateur fixe une durée prédéfinie (D) de mise en veille du compteur à fluides, le compteur à fluides se mettant en veille pendant la durée prédéfinie après chaque envoi d'une trame comprenant des informations représentatives d'un relevé de consommation de fluides.

4. Procédé selon la revendication 2, **caractérisé en ce que** le système compteur centralisateur transmet une trame, dite de relevé, demandant l'envoi d'une trame comprenant des informations représentatives d'un relevé de consommation de fluides au compteur à fluides afin d'obtenir du compteur à fluides une trame comprenant des informations représentatives d'un relevé de consommation de fluides.

5. Procédé selon la revendication 1, **caractérisé en ce que**, la trame de signalisation permettant au système compteur centralisateur de se considérer comme apparié avec le compteur à fluides pendant la phase d'appariement fait partie d'une pluralité de trames de signalisation transmises par le compteur à fluides pendant une période prédéfinie.

6. Procédé selon la revendication 5, **caractérisé en ce que**, les trames comprenant des informations représentatives d'un relevé de consommation de fluides en provenance du compteur à fluides pendant la phase de transmission d'index sont envoyées à intervalles prédéfinis réguliers, le compteur à fluides se mettant en veille entre chaque envoi.

7. Procédé selon l'une des revendications précédentes, **caractérisé en ce que**, en cas d'appariement réussi entre le compteur à fluides et le système compteur centralisateur, l'unité intermédiaire transmet (410, 509) une trame contenant une information représentative d'un appariement réussi au compteur centralisateur (12C), une réception (411, 510) d'une trame contenant une information représentative d'un appariement réussi par le compteur centralisateur provoquant une obtention (412, 511) par le compteur centralisateur d'une clé de cryptage correspondant audit compteur à fluides et une transmission (413, 512) par le compteur centralisateur à l'unité intermédiaire de ladite clé de cryptage afin que chaque communication entre le compteur à fluides et l'unité intermédiaire puisse être cryptée.

8. Procédé selon l'une des revendications précédentes, **caractérisé en ce que** chaque transmission d'une trame de relevé par le système compteur centralisateur comprend une transmission d'une première trame de relevé par l'unité intermédiaire au compteur à fluides, la transmission de ladite première trame de relevé étant provoquée par une réception d'une deuxième trame de relevé en provenance du compteur centralisateur.

9. Procédé selon l'une des revendications précédentes, **caractérisé en ce que**, l'application d'émulation émulant un compteur à fluides virtuel est instanciée par le compteur centralisateur, chaque trame comprenant des informations représentatives d'un relevé de consommation de fluides reçu par le système compteur centralisateur est reçue par l'unité intermédiaire qui la retransmet au compteur centralisateur pour que le compteur à fluides virtuel qu'il a instancié puisse retransmettre lesdites informations représentatives d'un relevé de consommation de fluides à l'entité de gestion (15) via le concentrateur de données (11).

10. Système, dit système de relevé, pour être utilisé dans un système de gestion automatisée de comptage dans le cadre d'un service de distribution de fluides, ledit système de gestion automatisé de comptage comprenant une pluralité de compteurs à fluides le système de relevé comprenant au moins un premier module de communication conforme à un standard de communication sans fils utilisé par un compteur à fluides et un deuxième module de communication adapté pour communiquer par courants porteurs en ligne avec un concentrateur de données (11) dans une première bande fréquentielle via un premier réseau de type réseau de communication par courants porteurs en ligne (100), ledit concentrateur de données communiquant avec une entité de gestion (15) du système de gestion automatisée de comptage via un deuxième réseau et en ce que le système de relevé comprend des moyens pour instancier une application d'émulation émulant un compteur à fluides virtuel apte à communiquer directement avec le concentrateur de données (11) pour chaque compteur à fluides de la pluralité, et, pour chaque compteur à fluides de la pluralité, le compteur à fluides virtuel correspondant se charge de retransmettre des informations représentatives d'un relevé de consommation de fluides fournies au système de relevé par ledit compteur à fluides de la pluralité à l'entité de gestion (15) via le concentrateur de données (11), le système de relevé comprenant au moins une unité intermédiaire, chaque unité intermédiaire comprenant un module de communication identique au premier module de communication et étant associé à un compteur à fluides de la pluralité de type compteur à eau et/ou un compteur à fluides de la pluralité de type compteur à gaz, et un compteur centralisateur comprenant le deuxième module de communication et les moyens pour instancier une application d'émulation émulant un compteur à fluides virtuel apte à communiquer directement avec le concentrateur de données (11) pour chaque compteur à fluides de la pluralité, chaque unité intermédiaire et le compteur centralisateur étant deux dispositifs séparés et comprenant un module de communication adapté pour communiquer entre eux par courants porteurs en ligne dans une deuxième bande fréquentielle ne chevauchant pas ladite première bande fréquentielle via un troisième réseau de type réseau de communication par courants porteurs en ligne (101) distinct dudit premier réseau.

11. Dispositif, dit unité intermédiaire, pour être utilisé dans un système de gestion automatisée de comptage dans le cadre d'un service de distribution de fluides, ledit système de gestion automatisé de comptage comprenant une pluralité de compteurs à fluides, **caractérisé en ce que** l'unité intermédiaire est associée à un compteur à fluides de la pluralité de type compteur à eau et/ou à un compteur à fluides de la pluralité de type compteur à gaz et comprend un premier module de communication conforme à un standard de communication sans fils utilisé par chaque compteur à fluides de la pluralité et un deuxième module de communication adapté pour communiquer par courants porteurs en ligne avec un dispositif, dit compteur centralisateur, dans une première bande fréquentielle via un premier réseau de type réseau de communication par courants porteurs en ligne (101), ledit compteur centralisateur étant séparé de ladite unité intermédiaire et étant adapté pour communiquer par courants porteurs en ligne dans une deuxième bande fréquentielle ne chevauchant pas ladite première bande fréquentielle via un deuxième réseau, distinct dudit premier réseau, de type réseau de communication par courants porteurs en ligne (100) avec un concentrateur de données, ledit concentrateur de données communiquant avec une entité de gestion (15) du système de gestion automatisée de comptage via un troisième réseau, l'unité intermédiaire étant apte à relayer des informations représentatives de consommations de fluides transmises par chaque compteur à fluides auquel ladite unité est rattachée vers le compteur centralisateur afin que le compteur centralisateur puisse relayer lesdites informations vers l'entité de gestion via le concentrateur de données.

12. Dispositif, dit compteur centralisateur, pour être utilisé dans un système de gestion automatisée de comptage dans le cadre d'un service de distribution de fluides, ledit système de gestion automatisé de comptage comprenant une pluralité de compteurs à fluides, **caractérisé en ce que** le compteur centralisateur est associé à au moins une unité intermédiaire selon la revendication 11 et est séparé de ladite unité intermédiaire, et comprend un troisième module de communication pour communiquer par courants porteurs en ligne avec chaque unité intermédiaire dans une première bande fréquentielle via le premier réseau et un quatrième module de communication pour communiquer par courants porteurs en ligne dans une deuxième bande fréquentielle, ne chevauchant pas ladite première bande fréquentielle , via le deuxième réseau, distinct dudit premier réseau, avec le concentrateur de données, et des moyens pour instancier une application d'émulation émulant un compteur à fluides virtuel apte à communiquer directement avec le concentrateur de données pour chaque compteur à fluides de la pluralité, et, pour chaque compteur à fluides de la pluralité, le compteur à fluides virtuel correspondant se charge de retransmettre des informations représentatives d'un relevé de consommation de fluides fournies au système de relevé par ledit compteur à fluides de la pluralité à l'entité de gestion via le concentrateur de données.

## Patentansprüche

1. Automatisiertes Fernableseverfahren eines Fluidzählers, das im Rahmen eines Fluidverteilungsdiensts in einem automatisierten Zählerverwaltungssystem ausgeführt wird, das einen Fluidzähler (14A) und ein Zentralzählersystem genanntes System enthält, wobei der Fluidzähler (14A) einem drahtlosen Kommunikationsstandard entsprechende Rahmen an das Zentralzählersystem übertragen kann, wobei das Zentralzählersystem die Rahmen empfangen und über ein erstes Netz der Art Powerline-Kommunikationsnetz (100) mit einem Datenkonzentrator (11) mittels Powerline in einem ersten Frequenzband kommunizieren kann, wobei der Datenkonzentrator über ein zweites Netz mit einer Verwaltungsentität (15) des automatisierten Zählerverwaltungssystems kommuniziert, **dadurch gekennzeichnet, dass**, da das Zentralzählersystem einen Zentralzähler (12C) und eine Zwischeneinheit (13A) enthält, die dem Fluidzähler zugeordnet sind, wobei der Zentralzähler und die Zwischeneinheit zwei getrennte Vorrichtungen sind, die über ein drittes Netz der Art Powerline-Kommunikationsnetz (101) anders als das erste Netz (100) mittels Powerline in einem das erste Frequenzband nicht überlappenden zweiten Frequenzband miteinander kommunizieren können, das Verfahren enthält:
- Ausführen (401, 402, 403, 404, 405, 406, 407, 408, 409, 410, 411, 412, 413, 414) einer Paarungsphase zwischen dem Zentralzählersystem und dem Fluidzähler, in der die Zwischeneinheit jeden vom Fluidzähler geschickten Signalisierungsrahmen empfängt und annimmt, dass das Zentralzählersystem und der Fluidzähler gepaart sind, wenn es nach einem Empfang eines eine für eine Paarungsanforderung vom Zentralzähler repräsentative Information enthaltenden Rahmens einen Signalisierungsrahmen empfängt, und, wenn es mit dem Fluidzähler gepaart ist, eine Emulationsanwendung instanziiert, die einen virtuellen Fluidzähler emuliert, der für den Fluidzähler direkt mit dem Datenkonzentrator (11) kommunizieren kann;
- Ausführen einer Indexübertragungsphase, während der das Zentralzählersystem vom Fluidzähler Rahmen empfängt, die je für eine Fluidverbrauchsablesung repräsentative Informationen enthalten, wobei der virtuelle Fluidzähler die Weiterleitung der für eine Fluidverbrauchsablesung repräsentativen Informationen über den Datenkonzentrator (11) an die Verwaltungsentität (15) übernimmt.

2. Verfahren nach Anspruch 1, **dadurch gekennzeichnet, dass** die Paarungsphase außerdem nach dem Empfang eines Signalisierungsrahmens unter einer Vielzahl von vom Fluidzähler während der Paarungsphase übertragenen Signalisierungsrahmen durch das Zentralzählersystem die Übertragung (513) eines eine für eine erfolgreiche Paarung repräsentative Information enthaltenden Rahmens vom Zentralzählersystem an den Fluidzähler enthält, wobei der Empfang des die für die erfolgreiche Paarung repräsentative Information enthaltenden Rahmens durch den Fluidzähler die Übertragung der Vielzahl von Signalisierungsrahmen beendet.

3. Verfahren nach Anspruch 2, **dadurch gekennzeichnet, dass** während der Indexübertragungsphase das Zentralzählersystem eine vordefinierte Dauer (D) des Versetzens des Fluidzählers in den Bereitschaftszustand festlegt, wobei der Fluidzähler sich nach jedem Senden eines für eine Fluidverbrauchsablesung repräsentative Informationen enthaltenden Rahmens während der vordefinierten Dauer in den Bereitschaftszustand versetzt.

4. Verfahren nach Anspruch 2, **dadurch gekennzeichnet, dass** das Zentralzählersystem einen so genannten Ablesungsrahmen überträgt, der das Senden eines für eine Fluidverbrauchsablesung repräsentative Informationen enthaltenden Rahmens an den Fluidzähler anfordert, um vom Fluidzähler einen für eine Fluidverbrauchsablesung repräsentative Informationen enthaltenden Rahmen zu erhalten.

5. Verfahren nach Anspruch 1, **dadurch gekennzeichnet, dass** der Signalisierungsrahmen, der es dem Zentralzählersystem erlaubt, sich als mit dem Fluidzähler während der Paarungsphase gepaart zu betrachten, Teil einer Vielzahl von Signalisierungsrahmen ist, die vom Fluidzähler während einer vordefinierten Periode übertragen werden.

6. Verfahren nach Anspruch 5, **dadurch gekennzeichnet, dass**, da die für eine Fluidverbrauchsablesung repräsentative Informationen enthaltenden Rahmen, die während der Indexübertragungsphase vom Fluidzähler kommen, in gleichmäßigen vordefinierten Abständen gesendet werden, der Fluidzähler sich zwischen jedem Sendevorgang in den Bereitschaftszustand versetzt.

7. Verfahren nach einem der vorhergehenden Ansprüche, **dadurch gekennzeichnet, dass** im Fall einer erfolgreichen Paarung zwischen dem Fluidzähler und dem Zentralzählersystem die Zwischeneinheit einen eine für eine erfolgreiche Paarung repräsentative Information enthaltenden Rahmen an den Zentralzähler (12C) überträgt (410, 509), wobei ein Empfang (411, 510) eines eine für eine erfolgreiche Paarung repräsentative Informationen enthaltenden Rahmens durch den Zentralzähler einen Erhalt (412, 511) eines dem Fluidzähler entsprechenden Verschlüsselungsschlüssels durch den Zentralzähler und eine Übertragung (413, 512) des Verschlüsselungsschlüssels an die Zwischeneinheit durch den Zentralzähler bewirkt, damit jede Kommunikation zwischen dem Fluidzähler und der Zwischeneinheit verschlüsselt werden kann.

8. Verfahren nach einem der vorhergehenden Ansprüche, **dadurch gekennzeichnet, dass** jede Übertragung eines Ablesungsrahmens durch das Zentralzählersystem eine Übertragung eines ersten Ablesungsrahmens durch die Zwischeneinheit an den Fluidzähler enthält, wobei die Übertragung des ersten Ablesungsrahmens durch einen Empfang eines zweiten Ablesungsrahmens vom Zentralzähler bewirkt wird.

9. Verfahren nach einem der vorhergehenden Ansprüche, **dadurch gekennzeichnet, dass**, da die einen virtuellen Fluidzähler emulierende Emulationsanwendung vom Zentralzähler instanziiert wird, jeder Rahmen, der für eine vom Zentralzählersystem empfangene Fluidverbrauchsablesung repräsentative Informationen enthält, von der Zwischeneinheit empfangen wird, die ihn an den Zentralzähler zurücküberträgt, damit der virtuelle Fluidzähler, den er instanziiert hat, die für eine Fluidverbrauchsablesung repräsentativen Informationen über den Datenkonzentrator (11) an die Verwaltungsentität (15) rückübertragen kann.

10. System, Ablesesystem genannt, zur Verwendung in einem automatisierten Zählerverwaltungssystem im Rahmen eines Fluidverteilungsdiensts, wobei das automatisierte Zählerverwaltungssystem eine Vielzahl von Fluidzählern enthält, wobei das Ablesesystem mindestens ein von einem Fluidzähler verwendetes erstes Kommunikationsmodul entsprechend einem drahtlosen Kommunikationsstandard und ein zweites Kommunikationsmodul enthält, das geeignet ist, über Powerline mit einem Datenkonzentrator (11) über ein erstes Netz der Art Powerline-Kommunikationsnetz (100) in einem ersten Frequenzband zu kommunizieren, wobei der Datenkonzentrator mit einer Verwaltungsentität (15) des automatisierten Zählerverwaltungssystems über ein zweites Netz kommuniziert, und wobei das Ablesesystem Einrichtungen enthält, um eine Emulationsanwendung zu instanziieren, die einen virtuellen Fluidzähler emuliert, der für jeden Fluidzähler der Vielzahl direkt mit dem Datenkonzentrator (11) kommunizieren kann, und für jeden Fluidzähler der Vielzahl der entsprechende virtuelle Fluidzähler die Weiterleitung von für eine Fluidverbrauchsablesung repräsentativen Informationen, die vom Fluidzähler der Vielzahl an das Ablesesystem geliefert werden, über den Datenkonzentrator (11) an die Verwaltungsentität (15) übernimmt, wobei das Ablesesystem mindestens eine Zwischeneinheit enthält, wobei jede Zwischeneinheit ein Kommunikationsmodul gleich dem ersten Kommunikationsmodul und einem Fluidzähler der Vielzahl der Art Wasserzähler und/oder einem Fluidzähler der Vielzahl der Art Gaszähler zugeordnet enthält, und ein Zentralzähler das zweite Kommunikationsmodul und die Einrichtungen zur Instanziierung einer Emulationsanwendung enthält, die einen virtuellen Fluidzähler emuliert, der für jeden Fluidzähler der Vielzahl direkt mit dem Datenkonzentrator (11) kommunizieren kann, wobei jede Zwischeneinheit und der Zentralzähler zwei getrennte Vorrichtungen sind und ein Kommunikationsmodul enthalten, das geeignet ist, zwischen ihnen über ein drittes Netz der Art Powerline-Kommunikationsnetz (101) anders als das erste Netz in einem das erste Frequenzband nicht überlappenden zweiten Frequenzband mittels Powerline zu kommunizieren.

11. Vorrichtung, Zwischeneinheit genannt, zur Verwendung in einem automatisierten Zählerverwaltungssystem im Rahmen eines Fluidverteilungsdiensts, wobei das automatisierte Zählerverwaltungssystem eine Vielzahl von Fluidzählern enthält, **dadurch gekennzeichnet, dass** die Zwischeneinheit einem Fluidzähler der Vielzahl von der Art Wasserzähler und/oder einem Fluidzähler der Vielzahl von der Art Gaszähler zugeordnet ist und ein erstes Kommunikationsmodul gemäß einem drahtlosen Kommunikationsstandard, das für jeden Fluidzähler der Vielzahl verwendet wird, und ein zweites Kommunikationsmodul enthält, das geeignet ist, über Powerline mit einer Vorrichtung, Zentralzähler genannt, über ein erstes Netz der Art Powerline-Kommunikationsnetz (101) in einem ersten Frequenzband zu kommunizieren, wobei der Zentralzähler von der Zwischeneinheit getrennt und geeignet ist, mittels Powerline über ein zweites Netz anders als das erste Netz von der Art Powerline-Kommunikationsnetz (100) in einem das erste Frequenzband nicht überlappenden zweiten Frequenzband mit einem Datenkonzentrator zu kommunizieren, wobei der Datenkonzentrator über ein drittes Netz mit einer Verwaltungsentität (15) des automatisierten Zählerverwaltungssystems kommuniziert, wobei die Zwischeneinheit für Fluidverbrauche durch jeden Fluidzähler, an den die Einheit angeschlossen ist, übertragene repräsentative Informationen zum Zentralzähler weiterleiten kann, damit der Zentralzähler die Informationen über den Datenkonzentrator zur Verwaltungsentität weiterleiten kann.

12. Vorrichtung, Zentralzähler genannt, zur Verwendung in einem automatisierten Zählerverwaltungssystem im Rahmen eines Fluidverteilungsdiensts, wobei das automatisierte Zählerverwaltungssystem eine Vielzahl von Fluidzählern enthält, **dadurch gekennzeichnet, dass** der Zentralzähler mindestens einer Zwischeneinheit nach Anspruch 11 zugeordnet und von der Zwischeneinheit getrennt ist und ein drittes Kommunikationsmodul, um mittels Powerline über das erste Netz mit jeder Zwischeneinheit in einem ersten Frequenzband zu kommunizieren, und ein viertes Kommunikationsmodul, um mittels Powerline über das zweite Netz, das sich vom ersten Netz unterscheidet, in einem das erste Frequenzband nicht überlappenden zweiten Frequenzband mit dem Datenkonzentrator zu kommunizieren, und Einrichtungen enthält, um eine Emulationsanwendung zu instanziieren, die einen virtuellen Fluidzähler emuliert, der für jeden Fluidzähler der Vielzahl direkt mit dem Datenkonzentrator kommunizieren kann, und für jeden Fluidzähler der Vielzahl der entsprechende virtuelle Fluidzähler die Weiterleitung von für eine Fluidverbrauchsablesung repräsentativen Informationen, die vom Fluidzähler der Vielzahl an das Ablesesystem geliefert werden, über den Datenkonzentrator an die Verwaltungsentität übernimmt.

## Claims

1. Method for the remote automated reading of a fluid meter executed in an automated metering management system in the context of a fluid-distribution service, comprising a fluid meter (14A) and a system, referred to as a centralised-meter system, the fluid meter (14A) being able to transmit frames in accordance with a wireless communication standard to the centralised-meter system, the centralised-meter system being able to receive said frames and to communicate by powerline with a data concentrator (11) in a first frequency band via a first network of the powerline communication network type (100), said data concentrator communicating with a management entity (15) of the automated metering management system via a second network, **characterised in that**, the centralised-meter system comprising a centralised meter (12C) and an intermediate unit (13A) both associated with said fluid meter, the centralised meter and the intermediate unit being two separate devices able to communicate with one another by powerline in a second frequency band not overlapping said first frequency band via a third network of the powerline communication network type (101) distinct from said first network (100), the method comprises:
- performing (401, 402, 403, 404, 405, 406, 407, 408, 409, 410, 411, 412, 413, 414) a phase of pairing between the centralised-meter system and the fluid meter wherein the intermediate unit receives each signalling frame sent by the fluid meter and considers that the centralised-meter system and the fluid meter are paired when it receives a signalling frame following a reception of a frame containing information representing a pairing request from the centralised meter and, when it is paired with the fluid meter, instances an emulation application emulating a virtual fluid meter able to communicate directly with the data concentrator (11) on behalf of said fluid meter;
- performing an index transmission phase during which the centralised-meter system receives frames from the fluid meter each comprising information representing a fluid-consumption reading, the virtual fluid meter taking responsibility for retransmitting said information representing a fluid-consumption reading to the management entity (15) via the data concentrator (11).

2. Method according to claim 1, **characterised in that** the pairing phase further comprises, following the reception by the centralised metering system of a signalling frame among a plurality of signalling frames transmitted by the fluid meter during the pairing phase, transmitting (513), from the centralised metering system, to the fluid meter, a frame comprising information representing a successful pairing, the reception of the frame comprising the information representing the successful pairing by the fluid meter ending the transmission of the plurality of signalling frames.

3. Method according to claim 2, **characterised in that**, during the index transmission phase, the centralised-meter system fixes a predefined duration (D) of standby of the fluid meter, the fluid meter going on standby for a predefined period after each sending of a frame comprising information representing a fluid-consumption reading.

4. Method according to claim 2, **characterised in that** the centralised-meter system transmits a frame, referred to as a reading frame, requesting the sending of a frame comprising information representing a fluid-consumption reading to the fluid meter in order to obtain from the fluid meter a frame comprising information representing a fluid-consumption reading.

5. Method according to claim 1, **characterised in that**, the signalling frame enabling the centralised-meter system to consider itself to be paired with the fluid meter during the pairing phase forms part of a plurality of signalling frames transmitted by the fluid meter during a predefined period.

6. Method according to claim 5, **characterised in that**, the frames comprising information representing a fluid-consumption reading coming from the fluid meter during the index transmission phase are sent at regular predefined intervals, the fluid meter going on standby between each sending.

7. Method according one of the preceding claims, **characterised in that**, in the event of successful pairing between the fluid meter and the centralised-meter system, the intermediate unit transmits (410, 509) a frame containing information representing a successful pairing to the centralised meter (12C), a reception (411, 510) of a frame containing information representing a successful pairing by the centralised meter causing an obtaining (412, 511), by the centralised meter, of an encryption key corresponding to said fluid meter and a transmission (413,512), by the centralised meter to the intermediate unit, of said encryption key so that each communication between said fluid meter and the intermediate unit can be encrypted.

8. Method according to one of the preceding claims, **characterised in that** each transmission of a reading frame by the centralised-meter system comprises a transmission of a first reading frame by the intermediate unit to the fluid meter, the transmission of said first reading frame being caused by the reception of a second reading frame from the centralised meter.

9. Method according to one of the preceding claims, **characterised in that** the emulation application emulating a virtual fluid meter is instanced by the centralised meter, each frame comprising information representing a fluid-consumption reading received by the centralised-meter system is received by the intermediate unit, which retransmits it to the centralised meter so that the virtual fluid meter that it has instanced can retransmit said information representing a fluid-consumption reading to the management entity (15) via the data concentrator (11).

10. System, referred to as a reading system, to be used in an automated metering management system in the context of a fluid-distribution service, said automated metering management system comprising a plurality of fluid meters, the reading system comprising at least one first communication module in accordance with a wireless communication standard used by a fluid meter and a second communication module suitable for communicating by powerline with a data concentrator (11) in a first frequency band via a first network of the powerline communication network type (100), said data concentrator communicating with a management entity (15) of the automated metering management system via a second network, and in that the reading system comprises means for instancing an emulation application emulating a virtual fluid meter able to communicate directly with the data concentrator (11) for each fluid meter in the plurality, and, for each fluid meter in the plurality, the corresponding virtual fluid meter takes responsibility for retransmitting information, representing a fluid-consumption reading, supplied to the reading system by said fluid meter in the plurality to the management entity (15) via the data concentrator (11), the reading system comprising at least one intermediate unit, each intermediate unit comprising a communication module identical to the first communication module and being associated with a fluid meter in the plurality of the water meter type and/or a fluid meter in the plurality of the gas meter type, and a centralised meter comprising the second communication module and the means for instancing an emulation application emulating a virtual fluid meter able to communicate directly with the data concentrator (11) for each fluid meter in the plurality, each intermediate unit and the centralised meter being two separate devices and comprising a communication module suitable for communicating with each other by powerline in a second frequency band, not overlapping said first frequency band, via a third network of the powerline communication network type (101) distinct from said first network.

11. Device, referred to as an intermediate unit, to be used in an automated metering management system in the context of a fluid-distribution service, said automated metering management system comprising a plurality of fluid meters, **characterised in that** the intermediate unit is associated with a fluid meter in the plurality of the water meter type and/or a fluid meter in the plurality of the gas meter type and comprises a first communication module in accordance with a wireless communication standard used by each fluid meter in the plurality and a second communication module suitable for communicating by powerline with a device, referred to as a centralised meter, in a first frequency band via a first network of the powerline communication network type (101), said centralised meter being separate from said intermediate unit and being suitable for communicating by powerline in a second frequency band not overlapping said first frequency band via a second network, distinct from said first network, of the powerline communication network type (100) with a data concentrator, said data concentrator communicating with a management entity (15) of the automated metering management system via a third network, the intermediate unit being able to relay information representing fluid consumption transmitted by each fluid meter to which said unit is attached to the centralised meter so that said centralised meter can relay said information to the management entity via the data concentrator.

12. Device, referred to as a centralised meter, to be used in an automated metering management system in the context of a fluid-distribution service, said automated metering management system comprising a plurality of fluid meters, **characterised in that** the centralised meter is associated with at least one intermediate unit according to claim 11 and is separate from said intermediate unit, and comprises a third communication module for communicating by powerline with each intermediate unit in a first frequency band via the first network and a fourth communication module for communicating by powerline in a second frequency band, not overlapping the first frequency band, via the second network, distinct from said first network, with the data concentrator, and means for instancing an emulation application emulating a virtual fluid meter able to communicate directly with the data concentrator for each fluid meter in the plurality, and, for each fluid meter in the plurality, the corresponding virtual fluid meter takes responsibility for retransmitting information, representing a fluid-consumption reading, supplied to the reading system by said fluid meter in the plurality to the management entity via the data concentrator.
